# EUROPEAN PATENT APPLICATION

(11) **EP 3 787 307 A1**
(43) Date of publication of application: **03.03.2021**
(21) Application number: 19792528.2
(22) Date of filing: 05.04.2019
(51) Int. Cl.: H04Q 9/00, H04M 11/00

(54) **INFORMATION PROCESSING DEVICE AND INFORMATION PROCESSING METHOD**

(30) Priority: 27.04.2018 JP 2018086355
(71) Applicant: Sony Corporation, 108-0075 Tokyo (JP)
(72) Inventor: YUKI, Taichi, Tokyo 108-0075 (JP); IKENAGA, Mari, Tokyo 108-0075 (JP); YAMAMOTO, Kazunori, Tokyo 108-0075 (JP); TORII, Kuniaki, Tokyo 108-0075 (JP); SATO, Naoyuki, Tokyo 108-0075 (JP)
(74) Representative: 2SPL Patentanwälte PartG mbB
(86) International application number: PCT/JP2019/015119
(87) International publication number: WO 2019/208170

(57) **Abstract**

There is provided a technology that permits an operation requester to operate an apparatus by using a permission input apparatus that matches a situation of a person having operation authority.

An information processing device includes: an input signal acquisition unit configured to acquire an input signal about an operation of an apparatus; an information acquisition unit configured to acquire information obtained by performing person having authority selection processing to select a person having authority who has permission authority about the operation instructed by the input signal acquired by the input signal acquisition unit, permission input apparatus selection processing to select a permission input apparatus according to a situation of the selected person having authority, and reception processing to receive a signal regarding operation permission from the selected permission input apparatus; and an apparatus control unit configured to perform control according to the operation instructed by the input signal acquired by the input signal acquisition unit on the basis of the information acquired by the information acquisition unit.

## Description

### TECHNICAL FIELD

The present technology relates to an information processing device and an information processing method, and particularly to a technical field of apparatus control.

### BACKGROUND ART

There is known a technology of controlling actions of apparatuses in an environment according to a command input from a user in a device that controls actions of the apparatuses in the environment. For example, Patent Document 1 discloses a technology of controlling an action of an apparatus in an environment by a user inputting a voice instruction into the device.

### CITATION LIST

### PATENT DOCUMENT

Patent Document 1: Japanese Patent Application Laid-Open No. 2017-123564

### SUMMARY OF THE INVENTION

### PROBLEMS TO BE SOLVED BY THE INVENTION

In that connection, if anyone can operate the apparatus by voice input, there is a possibility that an operation that is not assumed by a user who manages the operation of the apparatus (hereinafter also referred to as person having operation authority) may be performed by another user (hereinafter also referred to as operation requester).

Here, it is considered that, when the operation requester inputs a voice for operating the apparatus, permission of the person having operation authority is required to execute the command.

However, if an input method of operation permission of the person having operation authority for the operation of the operation requester is uniformly defined, the permission cannot be input in some cases due to the input method of permission depending on the current location and action situation of the person having operation authority. In such a case, the operation requester cannot operate the apparatus only because the person having operation authority happens to be unable to give permission by the input method.

Therefore, the present disclosure provides a technology that permits the operation requester to operate the apparatus by using a permission input apparatus that matches the situation of the person having operation authority.

### SOLUTIONS TO PROBLEMS

An information processing device according to the present technology includes: an input signal acquisition unit configured to acquire an input signal about an operation of an apparatus; an information acquisition unit configured to acquire information obtained by performing person having authority selection processing to select a person having authority who has permission authority about the operation instructed by the input signal acquired by the input signal acquisition unit, permission input apparatus selection processing to select a permission input apparatus according to a situation of the selected person having authority, and reception processing to receive a signal regarding operation permission from the selected permission input apparatus; and an apparatus control unit configured to perform control according to the operation instructed by the input signal acquired by the input signal acquisition unit on the basis of the information acquired by the information acquisition unit.

With this configuration, the operation of the apparatus is implemented according to the acquisition of the information regarding operation permission of the person having operation authority. Furthermore, the permission input apparatus to which the signal regarding the operation permission should be input can be selected according to the situation of the person having operation authority at that time.

Here, the information includes permission information, operation information for performing the permitted operation, and the like.

It is considered that the information processing device according to the present technology further includes a transmission unit configured to transmit a signal based on the input signal acquired by the input signal acquisition unit to an analysis device, and the information acquisition unit acquires the information obtained by performing the person having authority selection processing, the permission input apparatus selection processing, and the reception processing in the analysis device.

That is, the analysis device separate from the information processing device is provided, and the person having authority selection processing, the permission input apparatus selection processing, and the reception processing are performed by the analysis device.

It is considered that in the information processing device according to the present technology, the information acquisition unit performs the person having authority selection processing, the permission input apparatus selection processing, and the reception processing.

That is, the information processing device performs the person having authority selection processing, the permission input apparatus selection processing, and the reception processing without using another information processing device.

It is considered that the information processing device according to the present technology further includes a contents analysis unit configured to analyze an operation requester and operation contents from the input signal acquired by the input signal acquisition unit.

With this configuration, by analyzing the input signal by voice, action, and the like from the operation requester to the apparatus, the operation requester is identified, and information regarding the operation contents to the input apparatus is acquired.

It is considered that in the information processing device according to the present technology, the person having authority selection processing includes determining whether or not the operation requester has authority to perform the operation contents, and performing the permission input apparatus selection processing in a case where the operation requester does not have the authority.

In a case where the operation requester has the operation authority for the apparatus, permission of another person having operation authority is unnecessary. Therefore, only when the operation requester does not have the operation authority for the apparatus, the processing for selecting the permission input apparatus for the permission input by the person having operation authority is performed.

It is considered that in the information processing device according to the present technology, the permission input apparatus selection processing includes selecting the permission input apparatus according to a location or action of the person having authority.

This makes it possible to set an apparatus near the person having operation authority or an apparatus possessed by the person having operation authority as the permission input apparatus according to the current location of the person having operation authority. For example, in a case where the person having operation authority is out of home, it is preferable to set an apparatus such as a mobile phone currently possessed by the person having operation authority as the permission input apparatus, instead of an apparatus at home of the person having operation authority. Furthermore, for example, in a case where the person having operation authority is performing an action such as cooking that cannot be stopped, an apparatus that allows voice input without using a hand can be set as the permission input apparatus.

It is considered that in the information processing device according to the present technology, the permission input apparatus selection processing includes selecting an input method of the operation permission to the permission input apparatus according to a location or action of the person having authority.

For example, in a case where the person having operation authority is on a train, it is considered to request a reply by email instead of voice input to a mobile phone, which is the permission input apparatus. Furthermore, in a case where the person having operation authority is cooking and is occupied, it is considered to request voice input instead of manual input to the permission input apparatus.

It is considered that in the information processing device according to the present technology, the apparatus control unit performs processing on the operation instructed by the input signal acquired by the input signal acquisition unit on the basis of the acquisition of the information indicating the permission from the permission input apparatus corresponding to any of the person having authority.

When the operation requester requests the operation of the apparatus, it is also considered that information regarding permission about the operation cannot be input to the permission input apparatus due to the circumstance that there is no permission input apparatus around the person having operation authority and the like. Therefore, by setting a plurality of persons having operation authority, even in a case where information regarding permission cannot be acquired from one person having operation authority, if the information can be acquired from another person having operation authority, the operation requester can operate the apparatus.

It is considered that in the information processing device according to the present technology, the apparatus control unit performs processing on the operation instructed by the input signal acquired by the input signal acquisition unit on the basis of the information acquisition indicating the permission from all of the permission input apparatus corresponding to each of a plurality of the persons having authority.

Permission from a plurality of persons having operation authority may be required when the operation requester operates the apparatus. This is a case where, for example, when the operation requester is a child, obtaining permission from both the father and mother who are the persons having operation authority is a condition. In this way, it is possible to set a plurality of persons having operation authority (hereinafter also referred to as "essential persons having authority") whose permission is essential when the operation requester operates the apparatus.

It is considered that in the information processing device according to the present technology, in a case where the signal regarding the operation permission from the permission input apparatus is not received within a predetermined time from a request for the signal, the reception processing includes requesting a permission input apparatus selected for another person having authority to input the signal regarding the operation permission.

In a case where the operation permission needs to be received at least from only one of the set plurality of persons having operation authority, if no permission is given by one person having operation authority, the apparatus operation permission is more efficiently acquired by performing permission request for the operation permission to the other person having operation authority.

It is considered that in the information processing device according to the present technology, the person having authority is set according to an operation type of the apparatus.

With this configuration, it is possible to set whether or not permission is required for each operation of the apparatus of the operation requester, for example, it is possible to use the Internet in a computer device that is an apparatus to be operated, but in a case where a product and the like is purchased, permission from the person having operation authority is required.

It is considered that in the information processing device according to the present technology, the input signal about the operation of the apparatus is a signal by voice, and the contents analysis unit identifies the operation requester to be a target of the voice.

This makes it possible to identify the operation requester from the voice such as speech sound of the operation requester. Therefore, the operation requester can be identified simply by talking to the apparatus, and the operation on the apparatus can be input without unnecessary effort.

It is considered that in the information processing device according to the present technology, the input signal about the operation of the apparatus is an input signal by an action, and the contents analysis unit identifies the operation requester to be a target of the action.

This allows the operation requester to be identified from a gesture and other actions. Therefore, the operation requester can be identified simply by performing an action toward the apparatus, and the operation on the apparatus can be input without unnecessary effort.

Another information processing device according to the present technology includes: a permission request reception unit configured to receive a permission input request about an operation of an operation target apparatus, the permission input request being transmitted by selection by person having authority selection processing to select a person having authority who has permission authority about the operation of the operation target apparatus, and permission input apparatus selection processing to select a permission input apparatus according to a situation of the selected person having authority; and a permission information transmission unit configured to transmit a signal regarding the operation permission of the operation target apparatus in response to detection of the permission input.

With this configuration, the operation of the operation target apparatus is performed according to the permission input about the operation of the operation target apparatus by the person having operation authority.

Another information processing device according to the present technology includes: a person having authority selection unit configured to select a person having authority who has permission authority about an operation instructed by an input signal about the operation in response to acquisition of the input signal about the operation of an operation target apparatus; a permission input apparatus selection unit configured to select a permission input apparatus according to a situation of the person having authority selected by the person having authority selection unit; and a reception processing unit configured to receive a signal regarding operation permission from the permission input apparatus selected by the permission input apparatus selection unit.

With this configuration, the operation of the operation target apparatus is implemented according to the acquisition of the information regarding the operation permission of the person having operation authority. Furthermore, the permission input apparatus to which the signal regarding the operation permission should be input is selected according to the situation of the person having operation authority at that time.

An information processing method according to the present technology is an information processing method to be performed by an information processing device. The information processing method includes: input signal acquisition processing of acquiring an input signal about an operation of an apparatus; information acquisition processing of acquiring information obtained by performing person having authority selection processing to select a person having authority who has permission authority about the operation instructed by the input signal acquired by the input signal acquisition processing, permission input apparatus selection processing to select a permission input apparatus according to a situation of the selected person having authority, and reception processing to receive a signal regarding operation permission from the selected permission input apparatus; and apparatus control processing of performing control according to the operation instructed by the input signal acquired by the input signal acquisition processing on the basis of the information acquired by the information acquisition processing.

Another information processing method according to the present technology is an information processing method to be performed by an information processing device. The information processing method includes: permission request reception processing of receiving a permission input request about an operation of an operation target apparatus, the permission input request being transmitted by selection by person having authority selection processing to select a person having authority who has permission authority about the operation of the operation target apparatus, and permission input apparatus selection processing to select a permission input apparatus according to a situation of the selected person having authority; and permission information transmission processing of transmitting a signal regarding the operation permission of the operation target apparatus in response to detection of the permission input.

Another information processing method according to the present technology is an information processing method to be performed by an information processing device. The information processing method includes: processing of selecting a person having authority who has permission authority about an operation instructed by an input signal about the operation in response to acquisition of the input signal about the operation of an operation target apparatus; processing of selecting a permission input apparatus according to a situation of the selected person having authority; and processing of receiving a signal regarding operation permission from the selected permission input apparatus.

### EFFECTS OF THE INVENTION

The present technology makes it possible to provide a permission input method with a small operation burden according to the current location and the situation of the person having operation authority. This allows the operation requester to easily check the permission to operate the apparatus, and to implement a comfortable operating environment.

Note that above effects are not necessarily restrictive, and in addition to or instead of the above effects, any of the effects indicated in the present disclosure or other effects that can be determined from the present disclosure may be produced.

### BRIEF DESCRIPTION OF DRAWINGS

Fig. 1 is an explanatory diagram of a first example of a system configuration example of an embodiment of the present technology.
Fig. 2 is an explanatory diagram of a second example of the system configuration example of the embodiment.
Fig. 3 is an explanatory diagram of a third example of the system configuration example of the embodiment.
Fig. 4 is a block diagram of an agent device of the embodiment.
Fig. 5 is a block diagram of an operation target apparatus of the embodiment.
Fig. 6 is an explanatory diagram of an operation authority management database of the embodiment.
Fig. 7 is an explanatory diagram of an input apparatus management database of the embodiment.
Fig. 8 is an explanatory diagram of a person having authority situation management database of the embodiment.
Fig. 9 is an explanatory diagram of a priority management database of the embodiment.
Fig. 10 is a block diagram of a permission input apparatus of the embodiment.
Fig. 11 is a block diagram of a computer device of the embodiment.
Fig. 12 is a block diagram of a television device including the agent device of the embodiment.
Fig. 13 is a block diagram of a functional configuration of a management server of the embodiment.
Fig. 14 is an explanatory diagram of an outline of an agent system of the embodiment.
Fig. 15 is an explanatory diagram of an outline of the agent system of the embodiment.
Fig. 16 is a flowchart of system-wide processing of a first embodiment.
Fig. 17 is a flowchart of processing of an agent device of the first embodiment.
Fig. 18 is a flowchart of processing of a permission input device of the first embodiment.
Fig. 19 is a flowchart of system-wide processing of a second embodiment.
Fig. 20 is a flowchart of processing of an agent device of the second embodiment.

### MODE FOR CARRYING OUT THE INVENTION

The embodiment will be described below in the following order.
<1. System configuration>
<2. First configuration example: agent device>
<3. Second configuration example: agent device with built-in output apparatus>
<4. Third configuration example: configuration using external management server>
<5. Outline of agent system>
<6. Processing of first embodiment>
<7. Processing of second embodiment>
<8. Conclusion and modification>

### <1. System configuration>

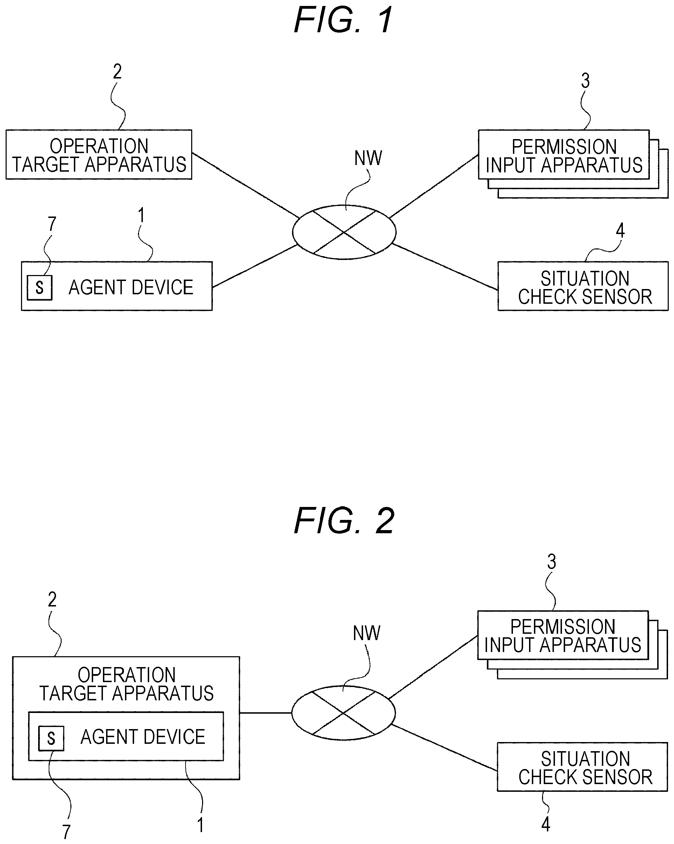

To begin with, as an embodiment, system configuration examples including an agent device 1 will be described. Figs. 1 to 3 show configuration examples of a network system of the embodiment.

The present embodiment is an agent system that implements an operation of an operation target apparatus 2 (which means an output apparatus to be operated) by a user inputting a command to the agent device 1. In a case where the user does not have operation authority of the operation target apparatus 2, whether or not to implement the operation of the operation target apparatus 2 is determined by the presence or absence of permission of another user who has the operation authority of the operation target apparatus 2. Furthermore, the user having operation authority can permit execution of the operation of the operation target apparatus 2 by inputting a permission command to a permission input apparatus 3.

Hereinafter, in the present embodiment, among users who use the agent system, a user who inputs a command to the agent device 1 for operating the operation apparatus 2 is denoted as an operation requester. Furthermore, among the users, a person having authority to perform the operation of the operation target apparatus 2 without permission by inputting a command to the agent device 1, or a person having authority to permit the operation requester to operate the operation target apparatus 2 is denoted as a person having operation authority.

Furthermore, the agent device 1 in the present embodiment is a device that includes an information processing device and supplies the operation target apparatus 2 with control according to a signal input from the user or information for control.

More specifically, the agent device 1 inputs an ambient voice picked up by a microphone, a captured surrounding image captured by an image capturing device, and other surrounding detection signals from various sensing apparatuses. Then, the agent device 1 is a device that can recognize the current situation and operation instructions of the user on the basis of the input signals, and control the operation target apparatus such as a television device according to the current situation and operation instructions of the user.

Furthermore, as the embodiment, examples of the operation target apparatus 2 include a television device 2. Hereinafter, the operation target apparatus 2 is also denoted as the television device 2. Of course, the television device 2 is one example, and various devices are assumed as an output device that cooperates with the agent device 1, including, for example, a lighting device, audio device, hot-water supply operation apparatus, refrigerator, air conditioner apparatus, dialogue device, robot, personal computer device, terminal device, tablet, and the like. The action of the television device 2 in the description of the embodiment can be similarly applied to these various output apparatuses.

Furthermore, the permission input apparatus 3 in the present embodiment is an apparatus that includes an information processing device and supplies, to the agent device 1, information according to a signal of permission, no permission, and the like to an operation request of the operation target apparatus 2 input from the person having operation authority. The permission input apparatus 3 can be implemented by various apparatuses as long as the apparatuses are peripheral apparatuses of the person having operation authority who inputs permission and the like. Various devices are assumed as the permission input apparatus 3, for example, a personal computer device, terminal device, tablet, hot-water supply operation apparatus, remote controller for home electrical appliance, refrigerator, and the like.

As shown in Fig. 1, such an agent device 1, operation target apparatus 2, permission input apparatus 3, and situation check sensor 4 are communicable with each other via a network NW.

The network NW is required at least to be a transmission path via which the agent device 1 can communicate with an apparatus outside the system. Various forms are assumed, for example, the Internet, local area network (LAN), virtual private network (VPN), intranet, extranet, satellite communication network, community antenna television (CATV), communication network, telephone line network, mobile communication network, and the like.

The agent device 1 is an apparatus separate from the operation target apparatus 2.

Furthermore, in the example, the agent device 1 has a sensing apparatus 7 built-in.

As the sensing apparatus 7, all types of sensor are assumed, for example, a microphone, image capturing device (camera), contact sensor, load sensor, illuminance sensor, infrared sensor, acceleration sensor, angular velocity sensor, laser sensor, and the like.

In this example here, the sensing apparatus 7 is built in the agent device 1, but of course, the sensing apparatus 7 may be an apparatus separate from the agent device 1.

Moreover, as the sensing apparatus 7, it is also possible to assume a sensing device built into an apparatus including a smartphone, wearable device, and the like. In that case, according to the configuration example of Fig. 1, the smartphone or wearable device itself may be the agent device 1.

The agent device 1 acquires, for example, an operation instruction of the operation target apparatus 2 from the operation requester on the basis of information obtained from the sensing apparatus 7. The agent device 1 that has obtained the operation instruction requests the permission input apparatus 3 to input permission information of the operation. At this time, a plurality of permission input apparatuses 3 is provided. The agent device 1 acquires information regarding the person having operation authority of the television device 2 and the location and state (action) of the person having operation authority, and selects the permission input apparatus 3 according to the current location and state (action) of the person having operation authority.

The agent device 1 performs the operation instruction and the like to the television device 2 according to information including operation permission and the like received from the permission input apparatus 3.

The situation check sensor 4 acquires information regarding the situation of the person having operation authority such as location and action, and, for example, transmits the information to the agent device 1 for storage.

As the situation check sensor 4, all types of sensor are assumed, for example, a microphone, image capturing device (camera), contact sensor, load sensor, illuminance sensor, infrared sensor, acceleration sensor, angular velocity sensor, laser sensor, and the like.

Furthermore, by acquiring a beacon ID, global positioning system (GPS) location information, and the like from the beacon or GPS, the situation check sensor 4 can also identify location information from the information.

For example, in a case where the GPS location information is used, the situation check sensor 4 acquires latitude information and longitude information as the current location from the information received by the GPS receiver, for example, periodically.

Furthermore, in a case where the beacon is used, the situation check sensor 4 acquires the beacon ID when located within a specified range from the beacon. The situation check sensor 4 transmits the beacon ID to the agent device 1, and the situation check sensor 4 receiving the beacon ID acquires the location information on the basis of the beacon ID.

Fig. 2 shows an example in which the agent device 1 is built in the operation target apparatus 2 and the sensing apparatus 7 is built in the agent device 1.

Furthermore, the sensing apparatus 7 may be separated from the agent device 1 and the operation target apparatus 2. Furthermore, the sensing apparatus 7 provided as a separate body may function as the situation check sensor 4.

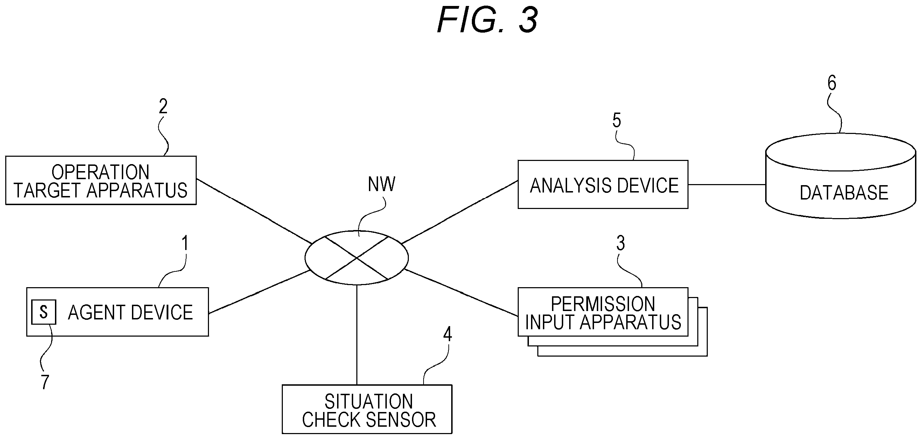

In Fig. 3, the agent device 1, the operation target apparatus 2, and the situation check sensor 4 are separate bodies, and can communicate with an analysis device 5 via the network NW. Furthermore, the analysis device 5 can access a database 6. Hereinafter, "database" is also denoted as "DB". Details of the DB will be described later.

The agent device 1 can cause the analysis device 5 to perform necessary processing. The analysis device 5 is, for example, an artificial intelligence (AI) engine, and can transmit notification including selection of an appropriate permission input apparatus, operation permission information, and the like to the agent device 1 on the basis of input analysis data, and the like.

Each of the above configurations is merely one example. Various other modes of the configuration of the actual agent device 1, the operation target apparatus 2, the situation check sensor 4, the analysis device 5, the DB 6, the sensing apparatus 7, and the like can be considered.

### <2. First configuration example: agent device>

As a first configuration example, a configuration example of the agent device 1, the television device 2 (operation target apparatus 2), and the permission input apparatus 3 will be described in the example according to the Fig. 1.

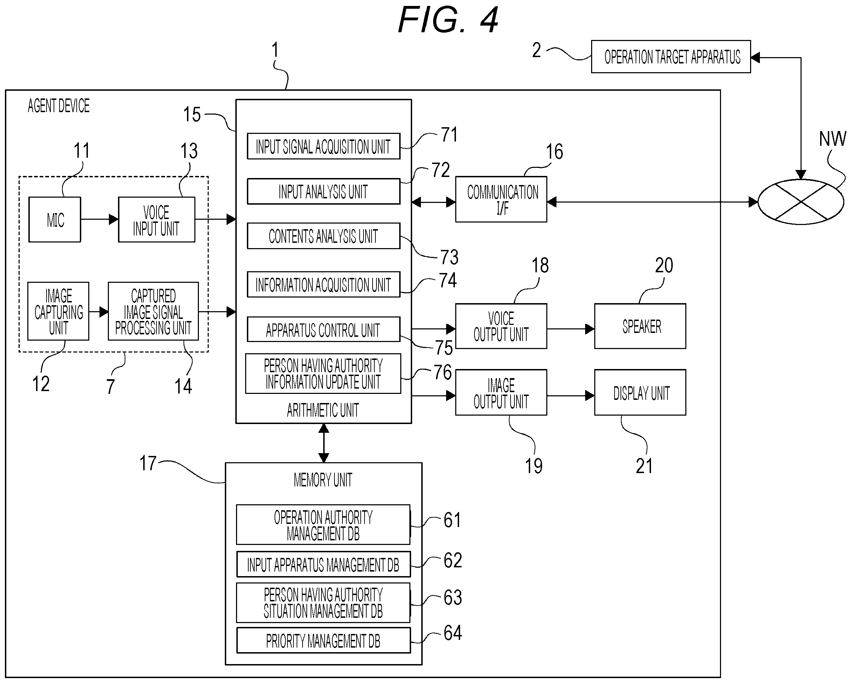

Fig. 4 shows a block diagram of the agent device 1. This is an example in which the agent device 1 has the sensing apparatus 7 built-in.

The agent device 1 includes the sensing apparatus 7, an arithmetic unit 15, a communication interface 16, a memory unit 17, a voice output unit 18, an image output unit 19, a speaker 20, and a display unit 21.

As the sensing apparatus 7, a microphone 11, an image capturing unit 12, a voice input unit 13, and a captured image signal processing unit 14 are shown here.

An ambient voice is collected by the microphone 11 and output as a voice signal. The voice signal obtained by the microphone 11 is subjected to amplification processing, filtering processing, furthermore, A/D conversion processing, and the like by the voice input unit 13 and is supplied to the arithmetic unit 15 as a digital voice signal.

The image capturing unit 12 captures surrounding images. A captured image signal obtained by an imager in the image capturing unit 12 is subjected to necessary processing by the captured image signal processing unit 14 and supplied to the arithmetic unit 15 as image data in frame units.

The voice signal of the ambient voice and the image signal of an ambient scene are input by such a sensing apparatus 7 to the arithmetic unit 15 constantly (for example, while the power is turned on) continuously or intermittently.

The arithmetic unit 15 includes, for example, an information processing device such as a microcomputer.

The arithmetic unit 15 has functions as an input signal acquisition unit 71, an input analysis unit 72, a contents analysis unit 73, an information acquisition unit 74, an apparatus control unit 75, and a person having authority information update unit 76. These functions are expressed by, for example, software that defines processing of a microcomputer and the like. Details of the processing performed by the arithmetic unit 15 on the basis of these functions will be as described later.

The input signal acquisition unit 71 acquires an input signal about apparatus operations. Specifically, the input signal acquisition unit 71 manages input from devices of the sensing apparatus 7 including the microphone 11, the image capturing unit 12, and the like. For example, reception, temporary storage, and the like of input signals are performed.

The input analysis unit 72 performs processing for converting data acquired by the input signal acquisition unit 71 including a voice signal, an image signal, and the like into information that can be used by the contents analysis unit 73.

The contents analysis unit 73 performs processing for analyzing an instruction regarding the operation of the operation requester who is in front of the television device 2 on the basis of the information acquired from the input signal acquisition unit 71. The contents analysis unit 73 performs processing for analyzing voice input information and analyzing intention of the input information from the operation requester.

Specifically, the contents analysis unit 73 understands utterance regarding the user's operation of the operation target apparatus (term regarding the operation) by voice recognition, and enables settings to be changed according to the intention of the user.

For example, an utterance "Turn on the television" is understood as a word that causes the television device 2, which is the operation target apparatus, to execute voice output and image output of broadcast content (program and the like). For this purpose, for example, diverse words regarding various operations are stored in the memory unit 17 such that the intention of the user can be correctly understood by comparison. Specifically, a table that stores many words expressing one setting operation is provided, for example, about the television device 2, various words including "Turn on the television," "I want to watch television," "I want to watch news," "Turn on the television switch," and the like are recognized as words that instruct the output of the television device 2. The contents analysis unit 73 compares the utterance of the operation requester with the table to determine the intention of the operation requester.

Furthermore, the contents analysis unit 73 performs processing for analyzing the intention of the input information from the operation requester by analyzing sensing information by the image capturing unit 12 and reading the action performed by the operation requester. Specifically, the contents analysis unit 73 understands gesture regarding the user's operation of the operation target apparatus (action regarding the operation) by voice recognition, and enables the setting to be changed according to the intention of the user.

For example, a motion or shape of the hand or finger of the operation requester is understood as an action to cause the television device 2 to perform voice output and image output of broadcast content (program and the like). For this purpose, for example, the memory unit 17 stores diverse actions regarding various operations such that the user's intention can be correctly understood by comparison.

Furthermore, the contents analysis unit 73 performs processing for analyzing the sensing information by the image capturing unit 12 and identifying the operation requester (user) who is in front of the television device 2. The user identification may be identification of an individual or identification of user attributes, for example, age group identification.

For example, for an agent system used at home, it is considered to identify individual family members.

The information acquisition unit 74 confirms whether or not the operation requester has the operation authority of the television device 2 (whether or not the operation requester is a person having operation authority). Then, in a case where the operation requester has no operation authority (not a person having operation authority), the information acquisition unit 74 performs processing for selecting the person having operation authority whose permission is required for the operation requester to operate the television device 2.

Furthermore, the information acquisition unit 74 performs processing for selecting the permission input apparatus 3 to input permission from among a plurality of permission input apparatuses 3 that is set in advance for each person having operation authority depending on information regarding the situation including location, action, and the like of the selected person having operation authority.

Moreover, the information acquisition unit 74 requests the selected permission input apparatus 3 to provide permission information regarding the operation of the operation target apparatus 2, and acquires the permission information from the permission input apparatus 3. The permission information here includes not only the information permitting the operation of the operation target apparatus 2, but also information prohibiting the operation. Furthermore, the permission information may include not only information regarding the operation permission but also information regarding conditions such as "end processing according to the operation after 30 minutes".

Then, the information acquisition unit 74 acquires information obtained by performing the above-described processing.

When the information acquisition unit 74 acquires the permission information permitting the operation of the operation target apparatus 2, the apparatus control unit 75 transmits a command according to the operation contents analyzed by the contents analysis unit 73 to the operation target apparatus 2. This allows implementation of the operation of the operation target apparatus 2 desired by the operation requester

The person having authority information update unit 76 updates the information about the person having operation authority. Specifically, on receipt of the information regarding the location and state of each person having operation authority from the situation check sensor 4, the person having authority information update unit 76 updates, for example, the DB stored in the memory unit 17 on the basis of the information. Information regarding the state including the location, action, and the like of each person having operation authority is continuously or intermittently transmitted from the situation check sensor 4 to the person having authority information update unit 76.

Furthermore, the person having authority information update unit 76 also updates the DB by a change in the person having operation authority and the like by the user's input operation.

The memory unit 17 provides a work area required by the arithmetic unit 15 for arithmetic processing, and stores coefficients, data, tables, DBs and the like to be used for arithmetic processing. Details of the DBs to be stored will be described later.

The communication interface 16 is a part that communicates with the agent device 1 and the television device 2 via the network NW.

The voice output unit 18 decodes voice data from a demodulated signal, and then, for example, performs D/A conversion on the supplied voice data into an analog voice signal, performs power amplifier amplification processing and the like for supply to the speaker 20. With this configuration, voice guidance is given to the user.

The image output unit 19 decodes the image data from the demodulated signal, and then, for example, drives the display unit 21 to display the supplied image data. With this configuration, the display unit 21 outputs the image of received guidance information for the user.

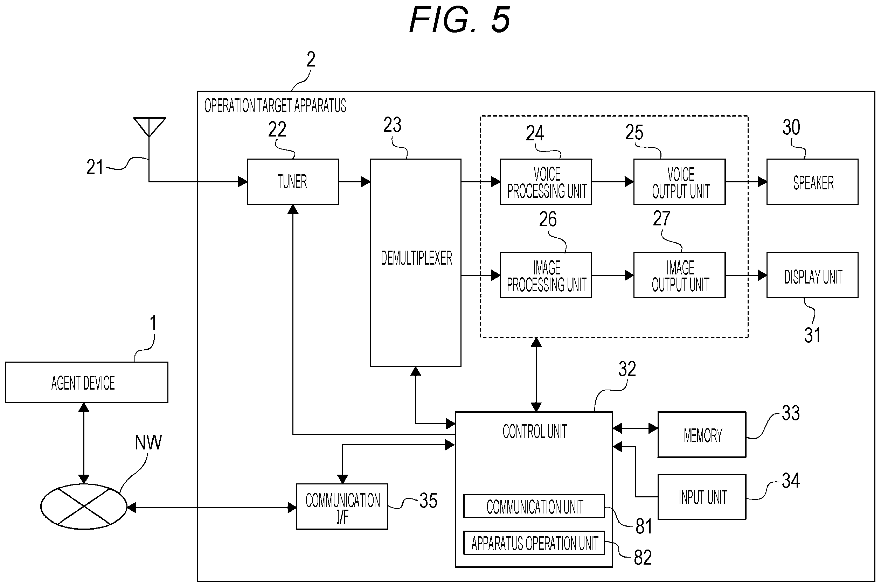

A configuration of the television device 2 serving as the operation target apparatus 2 is shown in Fig. 5.

The television device 2 receives and demodulates a broadcast wave received by an antenna 21 with a tuner 22, and supplies the broadcast wave to a demultiplexer 23. The demultiplexer 23 supplies a voice data part in the demodulated signal to a voice processing unit 24 and supplies an image data part to an image processing unit 26.

The voice processing unit 24 decodes the voice data from the demodulated signal. Furthermore, the voice processing unit 24 performs signal processing on the voice data obtained by the decoding processing according to various output settings. For example, volume level adjustment, low-frequency emphasis processing, highfrequency emphasis processing, equalizing processing, noise cancellation processing, reverb processing, echo processing, and the like are performed. The voice processing unit 24 supplies the voice data that has undergone the processing to a voice output unit 25.

The voice output unit 25, for example, performs D/A conversion on the supplied voice data into an analog voice signal, performs power amplifier amplification processing and the like, and supplies the amplified analog voice signal to a speaker 30. With this configuration, the voice of the received broadcast content (program and the like) is output.

The image processing unit 26 decodes the image data from the demodulated signal. Furthermore, the image processing unit 26 performs signal processing on the image data obtained by decoding processing according to various output settings. For example, luminance processing, color processing, sharpness adjustment processing, contrast adjustment processing, noise reduction processing, and the like are performed. The image processing unit 26 supplies the image data that has undergone the processing to an image output unit 27.

The image output unit 27, for example, drives the display of a display unit 31 with the supplied image data. With this configuration, the display unit 31 outputs the image of the received broadcast content.

A functional configuration of a control unit 32 will be described. The control unit 32 includes, for example, a microcomputer and the like, and is provided with a communication unit 81 and an apparatus operating unit 82.

The communication unit 81 can communicate with the arithmetic unit 15 of the agent device 1 via the network NW by a communication interface 35. This allows the control unit 32 to acquire output setting information regarding the television device 2 from the arithmetic unit 15.

The apparatus operating unit 82 performs control according to the output setting received by the communication unit 81 from the agent device 1, thereby implementing various outputs in the television device 2 according to the output setting set by the agent device 1.

An input unit 34 is, for example, an input unit for the user operation, and is configured as an operator or a receiving unit for a remote controller.

On the basis of the user operation information from the input unit 34, the control unit 32 performs reception setting of the tuner 22, action control of the demultiplexer 23, voice processing setting control in the voice processing unit 24, image output setting processing control in the image processing unit 26, and the like.

A memory 33 stores information necessary for the control unit 32 to perform control. For example, actual setting values according to various image settings and voice settings are also stored in the memory 33 and can be read by the control unit 32.

Note that the television device 2 of Fig. 5 has a configuration example in which broadcast waves are received by the antenna 21. However, of course, the television device 2 may support Internet broadcasting and the like via cable television or network NW, or for example, may have an internet browser function and the like. Furthermore, Fig. 5 is just one example as the operation target apparatus 2.

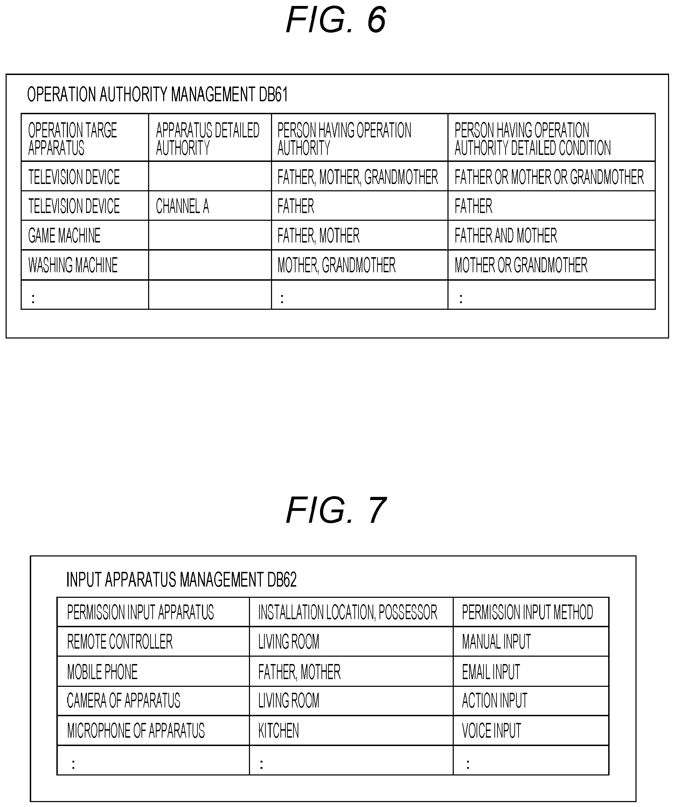

Next, the DBs used for the arithmetic unit 15 of the agent device 1 having these functions to select the person having operation authority for the operation instructed by the input signal and selecting the permission input apparatus 3 for obtaining permission from the selected person having operation authority and the like will be described with reference to Figs. 6 to 9. In the agent device 1, for example, various DBs are stored in the memory unit 17.

The DBs include, for example, an operation authority management DB 61, an input apparatus management DB 62, a person having authority situation management DB 63, a priority management DB 64, and the like.

Of course, other than these DBs, the DBs may include a DB necessary for functioning as the agent device 1 of the embodiment.

The operation authority management DB 61 stores, for example, information on the person having operation authority for the operation target apparatus 2 as shown in Fig. 6. For example, "father, mother, grandmother" are stored as the person having operation authority for the "television device", which is an operation target apparatus.

Furthermore, it is also possible to set the person having operation authority for each function of the operation target apparatus 2. For example, "father" is set as the person having operation authority for a specified channel operation such as "channel A" of the "television device", which is the operation target apparatus 2. That is, in order to change the channel to "channel A" while the operation requester is watching the "television device", the permission of "father", who is the person having operation authority, is required again.

In this way, the person having operation authority can be set for each function of the operation target apparatus 2, for example, out of functions of the "television device", setting the operation authority for the channel operation of "channel A" to "father" and setting the operation authority for "recording function" to "mother".

Note that it is also possible to set a person having operation authority as the person having operation authority for all functions of the "television device", and to set another person having authority as the person having operation authority for only some functions of the "television device".

Moreover, detailed conditions for permission of the person having operation authority can be set. For example, for "father, mother" who are persons having operation authority, it is possible to set whether or not it is necessary to obtain permission from either "father" or "mother" (OR condition) or whether or not it is necessary to obtain permission from all of "father" and "mother" (AND condition).

Various settings such as person having operation authority for the operation target apparatus 2 may be set in advance when the operation target apparatus 2 is installed, or may be arbitrarily updated according to a time zone in which the operation requester operates the operation target apparatus 2, and the like.

The input apparatus management DB 62 stores the installation location, possessor, and permission input method for each permission input apparatus 3, as shown in Fig. 7. For example, for the "remote controller", "living room" is stored as the installation location of the remote controller, and "manual input" is stored as the permission input method.

The permission input method refers to a method for the person having operation authority to perform permission input to the permission input apparatus 3, and refers to, for example, manual input to perform permission input manually by pressing a remote controller button and the like of the television device and the like, email input to perform permission input by transmitting an email of contents showing permission by using a mobile phone and the like, an action input to perform permission input by performing an action that means permission to a camera device built in an apparatus such as an air conditioner, and voice input to input permission by voice to a microphone built in an apparatus such as a hot-water supply operation apparatus. Note that other than the above methods, various input methods are assumed depending on the mode of the permission input apparatus 3 as the permission input method.

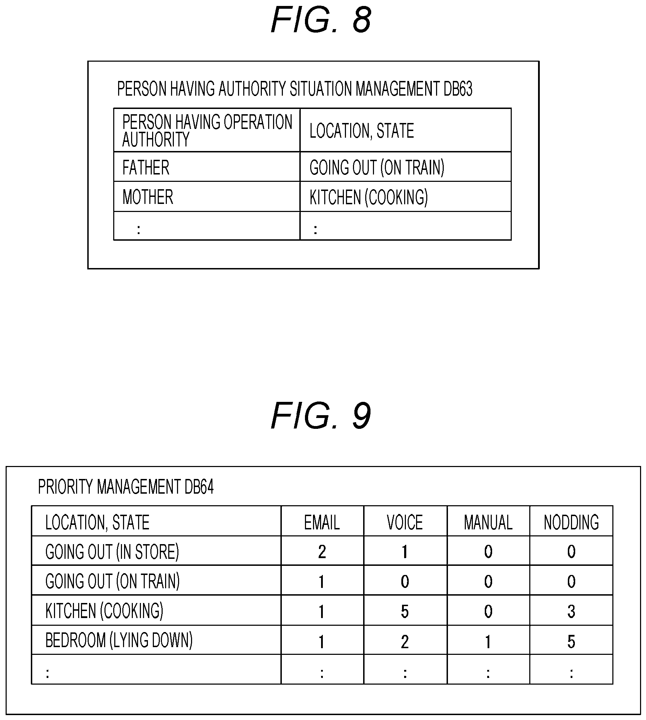

The person having authority situation management DB 63 stores information regarding the location and state of each person having operation authority as shown in Fig. 8. The information regarding the situation such as the location and state (action) of the person having operation authority is acquired by the situation check sensor 4 and is stored in the person having authority situation management DB 63 at any time.

The priority management DB 64 stores priority of the permission input method for each location and state of the person having operation authority as shown in Fig. 9. For example, the priority is stored as a score for each input method. The score is set in 6 levels from "0" to "5", for example. This indicates that as the score value increases, the priority increases as the permission input method. The permission input method with high priority (score) is selected from the location and state of the person having operation authority, and an apparatus suitable for the permission input method is selected as the permission input apparatus 3 of the person having operation authority.

For example, in a case where the person having operation authority is cooking in a kitchen, it is considered that the person having operation authority is in an occupied state. In such a case, the score of manual permission input is set at "0", while the score of voice that is voice permission input is set at "5". That is, for the operation requester who is cooking in a kitchen, it can be said that the voice permission input has higher priority than the manual permission input.

Furthermore, the location information on the person having operation authority refers to detailed current location information on the person having operation authority, such as "home" or "going out", information such as "living room", "children's room", "bedroom", "kitchen" for "home", information such as "on a train", "in store", "outdoors" for "going out".

Furthermore, the state of the person having operation authority refers to an action and the like currently performed by the person having operation authority himself or herself, including "cooking", "lying down", "exercising", and the like.

The above DBs may be built in a computer different from the agent device 1 (for example, television device 2, analysis device 5, and the like), or may be built in the agent device 1.

Furthermore, the operation authority management DB 61, the input apparatus management DB 62, the person having authority situation management DB 63, and the priority management DB 64 may be implemented in any form as long as accessible from the agent device 1. For example, all of the DBs may be formed in the memory unit 17 in the same system as the agent device 1, or some or all of the DBs may be provided separately in a computer system at a remote place and the like. Of course, the DBs do not have to be formed in one device (for example, one HDD and the like). Furthermore, each of the DBs does not have to be configured as one DB. For example, information stored as the person having authority situation management DB 63 may be stored and managed by the priority management DB 64. The above DBs described in the embodiment are merely an example of the storage unit for information related to the processing of the embodiment in the form of one DB.

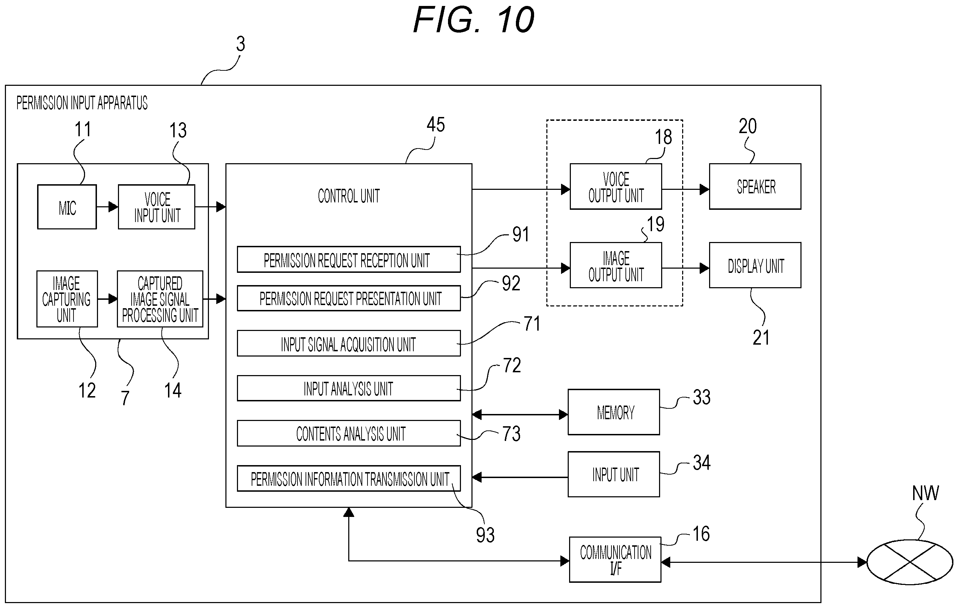

Fig. 10 shows a configuration of the permission input apparatus 3. Note that components having functions similar to functions of the agent device 1 of Fig. 4 and the television device 2 of Fig. 5 are denoted with the same reference symbols, and the description thereof will be omitted.

The permission input apparatus 3 includes the sensing apparatus 7, a control unit 45, the communication interface 16, the voice output unit 18, the image output unit 19, the speaker 20, the display unit 21, the memory 33, and the input unit 34.

The control unit 45 in the permission input apparatus 3 includes an information processing device, for example, a microcomputer and the like. The control unit 45 has functions as a permission request reception unit 91, a permission request presentation unit 92, the input signal acquisition unit 71, the input analysis unit 72, the contents analysis unit 73, and a permission information transmission unit 93.

The permission request reception unit 91 receives a permission information request about the operation of the operation target apparatus 2 from the agent device 1.

The permission request presentation unit 92 controls presentation for transmitting the permission information request to the person having permission authority. Specifically, the permission request presentation unit 92 supplies voice data that has undergone necessary processing and the like by the voice output unit 18 to the speaker 20. With this operation, voice guidance is given to the person having operation authority, for example, "Permission is requested for apparatus operation. Enter permission information by (permission input method)."

Furthermore, the permission request presentation unit 92 can also display, as an image, the permission information request for the person having operation authority by supplying the display unit 21 with image data that has undergone necessary processing and the like by the image output unit 19 and driving the display.

The input signal acquisition unit 71 manages input from devices, for example, the sensing apparatus 7 including the microphone 11, the image capturing unit 12, and the like, and the input unit 34. For example, reception, temporary storage, and the like of input signals are performed.

In a case where the input signal acquisition unit 71 acquires a voice signal, an image signal, and the like that require analysis of input intention, the input analysis unit 72 performs processing for converting data into information that can be used by the contents analysis unit 73.

The contents analysis unit 73 performs processing for analyzing an instruction regarding the input of the permission information of the person having operation authority who is in front of the permission input apparatus 3 on the basis of the information acquired from the input signal acquisition unit 71. The contents analysis unit 73 performs processing for analyzing the voice input information and the image input information and analyzing the intention of the input information from the person having operation authority.

For example, the memory 33 of the permission input apparatus 3 stores diverse actions and words regarding various pieces of permission information in advance in association with each other. The contents analysis unit 73 analyzes the intention of the input information from the person having operation authority in comparison with information of diverse actions and words regarding various operations stored in the memory 33 as described above.

The permission information transmission unit 93 can communicate with the arithmetic unit 15 of the agent device 1 via the network NW from the communication interface 16. The permission information transmission unit 93 transmits the acquired permission information on the person having operation authority to the agent device 1.

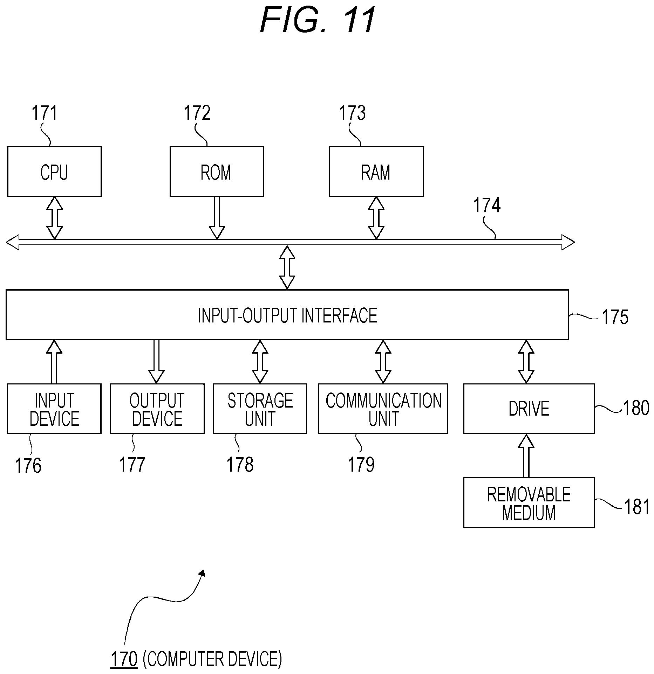

Fig. 11 shows a hardware configuration of the information processing device constituting the above-described agent device 1, the television device 2 as the operation target apparatus, the permission input apparatus 3, and the analysis device 5 as described later. Each device shown as the agent device 1, the television device 2, the permission input apparatus 3, and the analysis device 5 can be implemented as a computer device 170 that can perform information processing and information communication as shown in Fig. 11.

In Fig. 11, a central processing unit (CPU) 171 of the computer device 170 performs various types of processing according to a program stored in a read only memory (ROM) 172 or a program loaded from a storage unit 178 to a random access memory (RAM) 173. The RAM 173 also stores data necessary for the CPU 171 to perform various types of processing and the like as needed.

The CPU 171, the ROM 172, and the RAM 173 are connected to one another via a bus 174. An input-output interface 175 is also connected to the bus 174.

The sensing apparatus 7 or an input device 176 including an operator or an operation device is connected to the input-output interface 175.

Furthermore, it is also considered that an output device 177 including a display such as a liquid crystal display (LCD) or an organic electro-luminescence (EL) panel, a speaker, and the like are connected to the input-output interface 175.

The storage unit 178 including a hard disk and the like and a communication unit 179 including a modem and the like may be connected to the input-output interface 175.

The communication unit 179 performs communication processing via a transmission path such as the Internet shown as the network NW, or performs communication by wired/wireless communication, bus communication, and the like between respective devices.

A drive 180 is also connected to the input-output interface 175 as necessary. A removable medium 181 such as a magnetic disk, an optical disk, a magneto-optical disk, or a semiconductor memory is appropriately mounted. A computer program read therefrom is installed in the storage unit 178 as necessary.

In a case where functions of the arithmetic unit 15 of the agent device 1, the control unit 32 of the television device 2, the control unit 45 of the permission input apparatus 3, and the analysis device 5 described above are executed by software, a program that constitutes the software can be installed from a network or a recording medium.

The recording medium includes the removable medium 181 including a magnetic disk, an optical disk, a magneto-optical disk, a semiconductor memory, and the like, the removable medium 181 recording the program and distributed to deliver the program to users. Alternatively, the recording medium also includes the ROM 172 in which the program is recorded, the hard disk included in the storage unit 178, and the like delivered to users in a state of being pre-installed in a device body.

### <3. Second configuration example: agent device with built-in output apparatus>

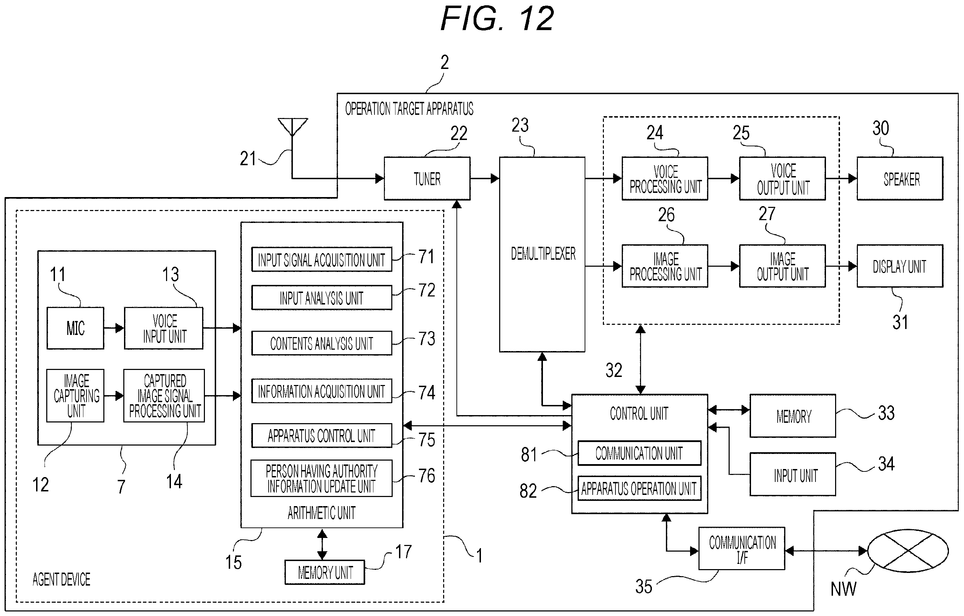

Fig. 12 shows a second configuration example in a case where the agent device 1 is built in the television device 2 that is an output device as in Fig. 2. Reference symbols of respective units are the same as in Figs. 4 and 5, and duplicate description of the units is avoided.

As shown in Fig. 12, the above-described configuration as the agent device 1 is provided in the television device 2. The control unit 32 and the arithmetic unit 15 can communicate with each other, for example, by an internal bus and the like, and exchange output setting information and the like. In this way, the agent device 1 can be incorporated as an internal device of the television device 2.

Note that processing of the arithmetic unit 15 in the agent device 1 can be performed by the control unit 32 of the television device 2 (operation target apparatus 2), and vice versa. Furthermore, the arithmetic unit 15 and the control unit 32 may be integrated.

### <4. Third configuration example: configuration using external management server>

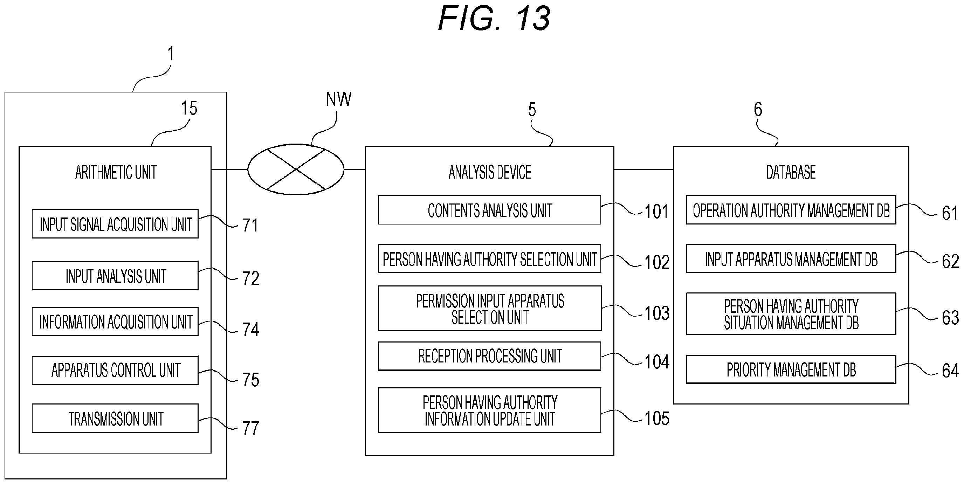

Fig. 13 shows a third configuration example corresponding to Fig. 3.

This is an example in which the agent device 1 can communicate with the analysis device 5 via the network NW.

The arithmetic unit 15 of the agent device 1 in the present configuration example includes the input signal acquisition unit 71, the input analysis unit 72, the information acquisition unit 74, the apparatus control unit 75, and a transmission unit 77. Furthermore, the agent device 1 includes the communication interface 16 as shown in Fig. 4 for communication via the network NW.

Meanwhile, the analysis device 5 includes a contents analysis unit 101, a person having authority selection unit 102, a permission input apparatus selection unit 103, a reception processing unit 104, and a person having authority information update unit 105.

In this case, as processing of the arithmetic unit 15, when the input signal acquisition unit 71 receives a signal such as a voice signal and an image signal by input from the operation requester, the input analysis unit 72 performs processing for converting the signal into information that can be used by the contents analysis unit 101. Then, the transmission unit 77 transmits the converted information to the analysis device 5 via the network NW by using the communication interface 16.

In the analysis device 5, the contents analysis unit 73 analyzes the information received from the agent device 1, and analyzes the intention of the input information from the operation requester. Then, in the analysis device 5, the person having authority selection unit 102 selects the person having operation authority whose permission for the operation is required, and the permission input apparatus selection unit 103 selects the permission input apparatus 3 for the person having operation authority to input the permission.

Then, the reception processing unit 104 requests the permission input apparatus 3 to provide the permission information about the operation of the television device 2, and receives a signal regarding the operation permission from the selected permission input apparatus 3. Then, the analysis device 5 transmits the signal regarding the operation permission from the permission input apparatus 3 to the agent device 1.

The arithmetic unit 15 of the agent device 1 that has received the permission information via the network NW transmits a command for executing the operation request input from the operation requester to the television device 2 according to the permission information received by the apparatus control unit 75.

The agent system can be implemented with the above-described configuration in a similar manner to the first configuration example and the second configuration example.

Note that the analysis device 5 includes one or more information processing devices. Furthermore, each function of the analysis device 5 is a function implemented by processing performed by the CPU 171 according to a program in the information processing device. However, the processing of all or some of the configurations described below may be implemented by hardware.

Furthermore, in a case where each function is implemented by software, each function does not need to be implemented by an independent program. Processing of a plurality of functions may be performed by one program, or one function may be implemented by cooperation of a plurality of program modules. Furthermore, each function may be distributed to a plurality of information processing devices. Moreover, one of the functions may be implemented by a plurality of information processing devices.

### <5. Outline of agent system>

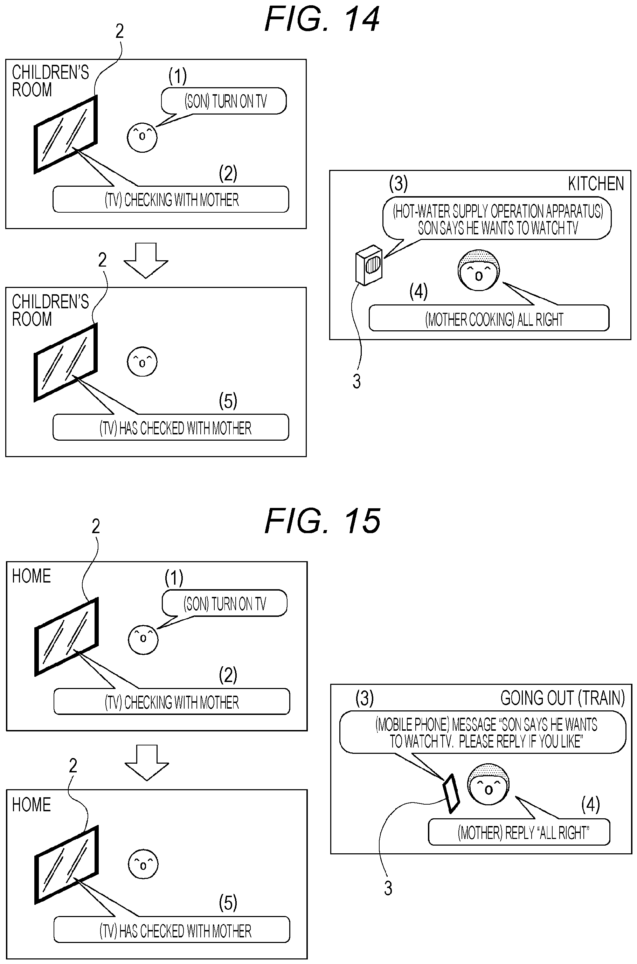

An Outline of the agent system of the present technology will be described with reference to Figs. 14 and 15. Here, as one example of an environment, a case where the agent system is used in a house where a user as a family member lives will be described. There are various operation target apparatuses 2 in the house, and it has been set in advance by input and the like to the apparatuses which user of the family is a person having operation authority of each of the operation target apparatuses 2.

Note that an example in which the agent device 1 is built in the television device 2 will be described here. Furthermore, this processing is performed by the control unit 15 of the agent device 1 receiving the input information regarding the operation of the operation target apparatus 2 from the operation requester.

Furthermore, the agent system may be used in any other environment such as a passenger car or other vehicles, office, store, educational facility, or public facility. Furthermore, one agent system may integrally deal with a plurality of geographically separated environments (for example, home and passenger car, or home and office).

Fig. 14 shows an example of the agent system in a case where, for the television device 2, a son, who is an operation requester but not a person having operation authority, and the mother of the son, who is a person having operation authority, are at home. Here, the son is in a children's room and the mother is in a kitchen and cooking. That is, the mother who is currently in the kitchen is in a state of being occupied with cooking, which is a state of not being able to determine the state of the child in the children's room.

To begin with, the son, who is an operation requester, performs voice input such as "Turn on the television" to the television device 2 with the built-in agent device 1.

Then, the internal agent device 1 determines whether or not the son who has performed the voice input is a person having operation authority. Here, since the son is not a person having operation authority of the television device 2, the agent device 1 selects the mother as a person having operation authority whose permission is required.

Next, the agent device 1 selects the permission input apparatus 3 for allowing the mother to input the permission information. Here, a candidate for the mother's permission input apparatus 3 may be a mobile phone possessed by the mother, a hot-water supply operation apparatus installed in the kitchen where the mother is present, and the like.

At this time, since the mother is cooking and is occupied, the agent device 1 does not select the mobile phone but selects the hot-water supply operation apparatus that is an apparatus installed in the kitchen and allows input of the permission information by voice and the like without using a hand as the permission input apparatus 3.

In this way, the hot-water supply operation apparatus selected as the permission input apparatus 3 notifies the mother of the permission request by a voice such as "Your son says he wants to watch television" from a speaker part. In response to this notification, the mother performs voice input such as "All right" to a microphone part of the hot-water supply operation apparatus, whereby the permission information is transmitted from the permission input apparatus 3 to the agent device 1.

Here, for example, as shown in Fig. 15, a case where the mother is going out and not at home is also considered. In such a case, the agent device 1 cannot receive the permission input from the mother who is the person having operation authority even if an apparatus installed at home is selected as the permission input apparatus 3.

Therefore, the agent device 1 selects the mobile phone possessed by the mother as the permission input apparatus 3. Then, the agent device 1 transmits an email to the mother's mobile phone with a message "Your son says he wants to watch television. Please reply if you like", thereby sending notification as the permission request to the mother.

In response to this notification, the mother sends back an email with a message "All right" with the mobile phone, whereby the permission information is transmitted from the permission input apparatus 3 to the agent device 1.

The agent device 1 that has received the permission information causes the television device 2 to perform control according to the operation request from the son. With this configuration, the son in the children's room can watch television with the television device 2.

This makes it possible to give the son permission to operate the restricted apparatus even if the son is out of the mother's sight.

Note that for example, the mother can perform voice input such as "No" to the hot-water supply operation apparatus that is the permission input apparatus 3, or can send back an email with a message "No" to the mobile phone. That is, it is also possible to transmit no-permission information about the son's operation of the television device 2.

In this case, the agent device 1 gives voice notification to the son, for example, "Permission is not obtained from the mother", and the operation of the television device 2 is not executed. Furthermore, in a case where the mother does not input the permission information for a predetermined time or longer, the operation of the television device 2 is not executed similarly.

### <6. Processing of first embodiment>

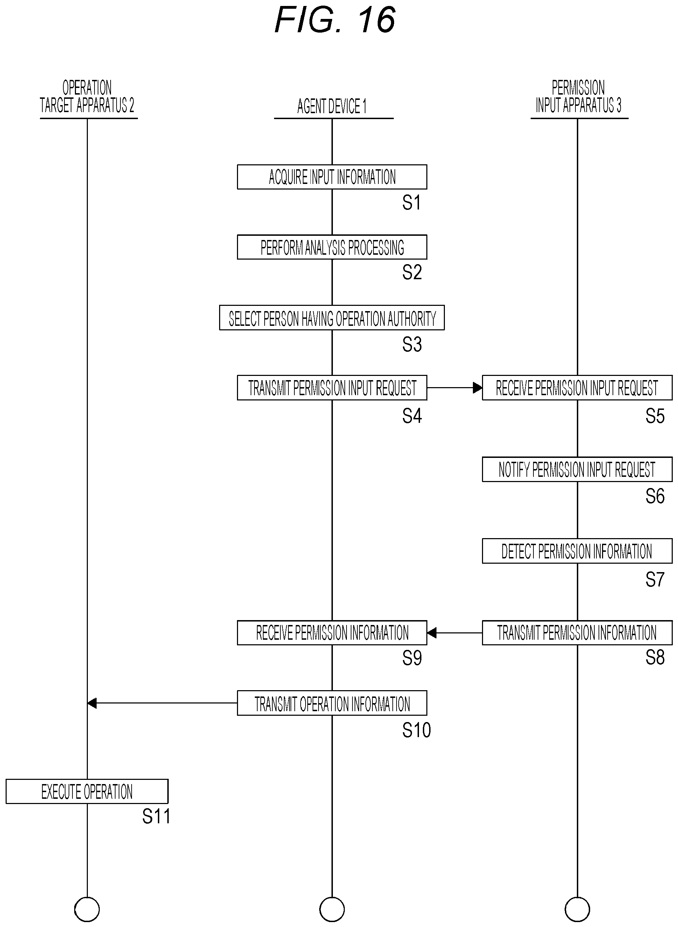

Processing of a first embodiment in the agent system will be described with reference to Figs. 16 to 18.

An outline of the agent system will be described with reference to Fig. 16. Fig. 16 shows one example of a processing flow to be executed by the agent device 1, the operation target apparatus 2 (television device 2), and the permission input apparatus 3. Here, the agent device 1 and the operation target apparatus 2 are described as separate bodies, but the present embodiment can also be applied in a case where the agent device 1 and the operation target apparatus 2 are integrated.

To begin with, in step S1, the agent device 1 acquires the input information by voice and the like regarding the operation of the operation target apparatus 2 from the operation requester, and in step S2, performs necessary analysis processing on the acquired input information.

Thereafter, in step S3, the agent device 1 confirms whether or not the operation requester is a person having operation authority. In a case where the operation requester is not a person having operation authority, the agent device 1 selects the person having operation authority for the operation target apparatus 2 the operation requester is trying to operate.

In step S4, the agent device 1 selects the permission input apparatus 3 suitable for the permission input from the current location or state of the person having operation authority, and transmits the permission input request to the permission input apparatus 3.

In step S5, on receipt of the permission input request from the agent device 1, in step S6, the permission input apparatus 3 notifies the person having operation authority of the permission input request, for example, by voice.

Then, in step S7, when the permission input apparatus 3 detects the input of the permission information by the person having operation authority, after analyzing the input permission information, in step S8, the permission input apparatus 3 transmits the permission information to the agent device 1.

In step S9, when the agent device 1 receives the permission information from the permission input apparatus 3, in step S10, the agent device 1 transmits the operation information for executing the operation of the operation target apparatus 2 from the operation requester to the operation target apparatus 2.

Note that in step S3, in a case where the operation requester has operation authority of the operation target apparatus 2, the agent device 1 advances the processing to step S10 without performing the processing of steps S4 to S9.

In step S11, on receipt of the operation information from the agent device 1, the operation target apparatus 2 performs the operation of the operation target apparatus 2 on the basis of the received operation information.

As described above, the operation of the operation target apparatus 2 requested by the operation requester is implemented by obtaining the permission of the person having operation authority.

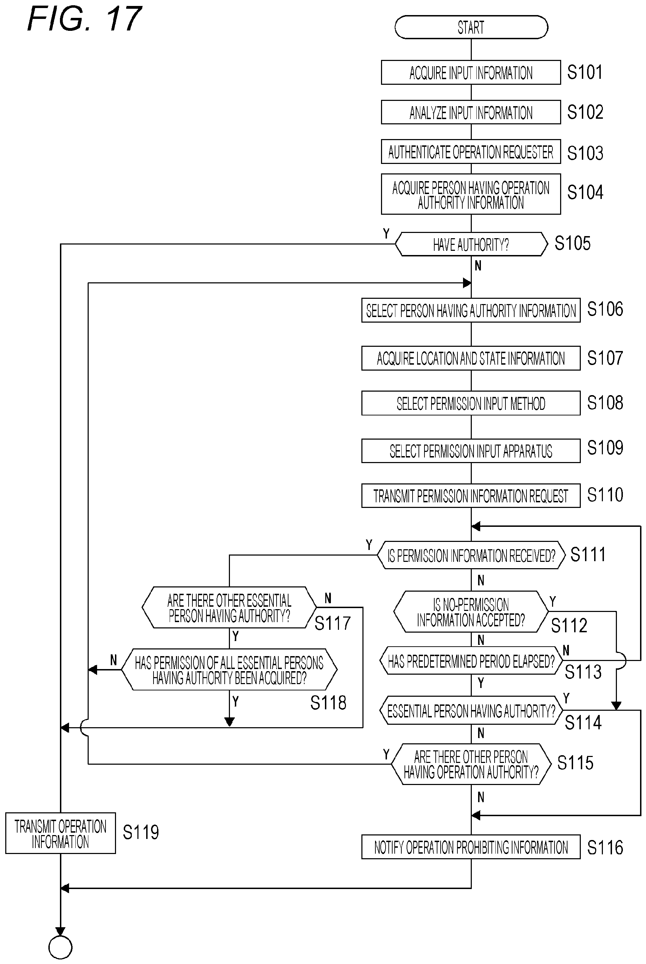

Next, processing to be performed by the arithmetic unit 15 of the agent device 1 in order to implement the action of the agent system in the first embodiment will be described with reference to Fig. 17.

The arithmetic unit 15 performs the processing when receiving the input signal regarding the operation of the television device 2 (operation target apparatus 2) from the operation requester.

To begin with, in step S101, the arithmetic unit 15 of the agent device 1 acquires input information regarding the operation of the television device 2 from the operation requester. The input information is voice uttered by the operation requester, an action such as a gesture by the operation requester, and the like. Note that in a case where the agent device 1 is built in the television device 2, it is also possible to directly input the operation to the input unit 34 and the like of the television device 2 of Fig. 12.

In step S102, the arithmetic unit 15 performs necessary analysis processing on the acquired input information. With this operation, the arithmetic unit 15 identifies the television device 2 and the operation contents for the television device 2 requested by the operation requester.

Furthermore, in step S103, the arithmetic unit 15 authenticates who is the operation requester. The arithmetic unit 15 performs processing for analyzing the sensing information by the image capturing unit 12 of the agent device 1 and identifying the operation requester who is in front of the agent device 1.

In step S104, the arithmetic unit 15 acquires the person having operation authority information for the identified television device 2. The arithmetic unit 15 acquires information about the person having operation authority and the detailed condition of the person having operation authority associated with the television device 2 from the operation authority management DB 61.

In step S105, the arithmetic unit 15 determines from the acquired information whether or not the operation requester is a person having operation authority. In a case where the operation requester is a person having operation authority, the arithmetic unit 15 determines that the operation requester has the authority to operate the television device 2, advances the processing to step S119, and transmits output information for performing the operation contents to the television device 2.

This allows the operation requested by the operation requester to be implemented in the television device 2. After the processing of step S119, the arithmetic unit 15 ends the processing of Fig. 17.

In step S105, in a case where the operation requester does not have the operation authority of the television device 2, the arithmetic unit 15 advances the processing to step S106 and selects one of all acquired persons having operation authority as a processing target.

Then, in step S107, the arithmetic unit 15 acquires information regarding the location and state of the processing target person having operation authority from the person having authority situation management DB 63.

Thereafter, in step S108, the arithmetic unit 15 selects the permission input method. With reference to the priority management DB 64, the arithmetic unit 15 acquires information on the permission input method associated with the location and state of the processing target person having operation authority.

Then, in step S109, the arithmetic unit 15 performs selection processing on the permission input apparatus 3. Specifically, to begin with, the arithmetic unit 15 makes a selection as a candidate for the permission input apparatus 3 that can be operated by the person having operation authority from the location information on the processing target person having operation authority. Next, the arithmetic unit 15 selects, as the permission input apparatus 3, one having the highest score value from among the permission input methods selected in step S108 according to the state of the person having operation authority.

An example of the mother who is a person having operation authority of the television device 2 in Fig. 14 will be described. To begin with, on acquisition of the operation input of "television device 2" from the son who is the operation requester, the arithmetic unit 15 confirms that the person having operation authority of the "television device 2" is "father", "mother" and "grandmother" in Fig. 6 and selects one of them, "mother".

Then, the arithmetic unit 15 confirms that the "mother" who is a person having operation authority in Fig. 8 is "cooking in a kitchen". Thereafter, for the mother who is currently cooking in a kitchen, the arithmetic unit 15 confirms that candidates for the permission input apparatus 3 are "apparatus microphone (hot-water supply operation apparatus)" associated with the place "kitchen", and "mobile phone" associated with the possessor "mother" as shown in Fig. 7.

At this time, as the priority score of the permission input method for the person having operation authority who is cooking in the kitchen, the score value of voice is "5", which is the highest as shown in Fig. 9. Therefore, with reference to Fig. 7, the arithmetic unit 15 selects the "apparatus microphone (hot-water supply operation apparatus)" associated with voice input as the permission input device 3 from among the "apparatus microphone (hot-water supply operation apparatus)" and "mobile phone" that are candidates for the permission input apparatus 3.

On selection of the permission input apparatus 3, in step S110, the arithmetic unit 15 transmits a permission information request to the selected permission input apparatus 3. After the transmission of the permission information in step S110, the arithmetic unit 15 performs processing for looping steps S111→S112→S113 until a predetermined period elapses in step S113.

Here, the predetermined time can be set at various times such as 10 seconds, 30 seconds, and 1 minute. However, it is preferred to set the time to prevent comfort from being impaired by waiting time of the operation requester for the permission.

Here, when the permission information is received from the permission input apparatus 3 in step S111 before the predetermined period elapses in step S113, the arithmetic unit 15 advances the processing to step S117. In step S117, the arithmetic unit 15 confirms whether or not an essential person having authority has been set among the selected persons having operation authority. The essential person having authority refers to a person having operation authority in a case where it is necessary to acquire permission information for a plurality of persons having operation authority as a condition (AND condition).

In a case where there is no setting of essential person having authority in step S117, if the permission information on any person having operation authority can be acquired from the permission input apparatus 3, the operation requester is permitted to operate the television device 2. Therefore, the arithmetic unit 15 advances the processing from step S117 to S119, and transmits operation contents information acquired in step S102 to the television device 2. After the processing of step S119, the arithmetic unit 15 ends the processing of Fig. 17.

With this operation, the operation of the television device 2 desired by the operation requester is executed.

Furthermore, in a case where there are essential persons having authority in step S117, the arithmetic unit 15 determines in step S118 whether or not the permission information on all the essential persons having authority has been acquired. In step S118, in a case where the permission information on all the essential persons having authority has been acquired, the arithmetic unit 15 advances the processing to step S119, and thereafter performs the similar processing as described above.

In step S118, in a case where the permission information on all the essential persons having authority has not been acquired, that is, in a case where the permission information of another person having operation authority needs to be acquired, the arithmetic unit 15 advances the processing to step S106, selects the next processing target person having operation authority, and thereafter executes the similar processing.

Next, on receipt of no-permission information in step S112, the arithmetic unit 15 advances the processing to step S116 regardless of whether or not the permission information of another person having operation authority is present, and notifies operation prohibiting information. For example, it can be considered that the arithmetic unit 15 notifies a message by voice from the speaker 20 of the agent device 1 that the operation permission is not obtained. Furthermore, the arithmetic unit 15 can also display the message on the display unit 21. After the processing of step S116, the arithmetic unit 15 ends the processing of Fig. 17.

On the other hand, when the predetermined time has elapsed in step S113, the arithmetic unit 15 determines in step S114 whether or not the processing target person having operation authority is an essential person having authority.

In step S114, in a case where the person having operation authority whose permission information is not received is an essential person having authority, the operation of the television device 2 is not executed regardless of whether or not the permission information is acquired from another person having operation authority.

Therefore, the arithmetic unit 15 advances the processing from step S114 to step S116, and thereafter performs the similar processing as described above.

Furthermore, in step S114, in a case where the permission information needs to be received at least from any of the persons having operation authority, the arithmetic unit 15 advances the processing to step S115. In step S115, the arithmetic unit 15 determines whether or not there is another person having operation authority. In step S115, in a case where there is another person having operation authority, the arithmetic unit 15 advances the processing to step S106, selects the next person having operation authority as the processing target, and thereafter performs the similar processing.

On the other hand, in step S115, in a case where there is no other person having operation authority, there is no person having operation authority from whom permission can be acquired, and thus the arithmetic unit 15 advances the processing to step S116, and thereafter performs the similar processing as described above.

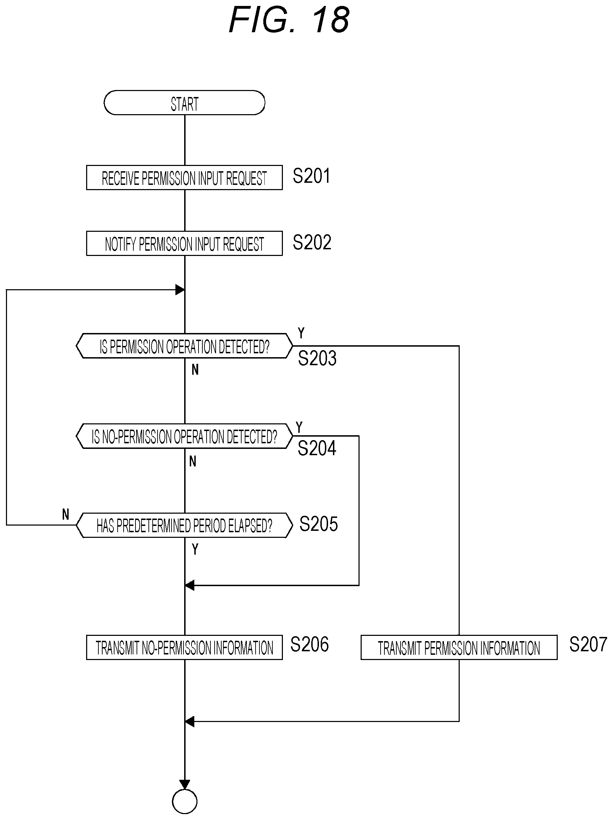

Next, processing to be performed by the control unit 45 of the permission input apparatus 3 in order to implement the action of the agent system in the first embodiment will be described with reference to Fig. 18.

The control unit 45 performs the processing on receipt of the permission input request from the agent device 1.

In step S201, when the control unit 45 receives the permission input request from the agent device 1, in step S202, the control unit 45 notifies the person having operation authority of the permission input request, for example, by voice.

After the processing of step S202, until the predetermined period elapses in step S205, the control unit 45 performs processing for looping steps S203→S204→S205.

Here, the predetermined time can be set at various times such as 10 seconds, 30 seconds, and 1 minute. However, it is preferred to set the time to prevent comfort from being impaired by waiting time of the operation requester for the permission.

Here, when the permission input from the person having operation authority is detected in step S203 before the predetermined period elapses in step S205, the control unit 45 advances the processing to step S207. In step S207, the control unit 45 transmits the permission information based on the permission input from the person having operation authority to the agent device 1. Then, after the processing of step S207, the control unit 45 ends the processing of Fig. 18.

Furthermore, when the no-permission input from the person having operation authority is detected in step S204 before the predetermined period elapses in step S205, the control unit 45 advances the processing to step S206. In step S206, the control unit 45 transmits the no-permission information based on the no-permission input from the person having operation authority to the agent device 1. Then, after the processing of step S206, the control unit 45 ends the processing of Fig. 18.

Furthermore, when the predetermined time elapses in step S205, since there is no permission input from the person having operation authority, the control unit 45 advances the processing to step S206, and transmits the no-permission information to the agent device 1.

In step S114 of Fig. 17, in a case where the person having operation authority whose permission information is not received is an essential person having authority, the operation of the television device 2 is not executed regardless of whether or not the permission information is acquired from another person having operation authority. Then, after the processing of step S206, the control unit 45 ends the processing of Fig. 18.

### <7. Processing of second embodiment>

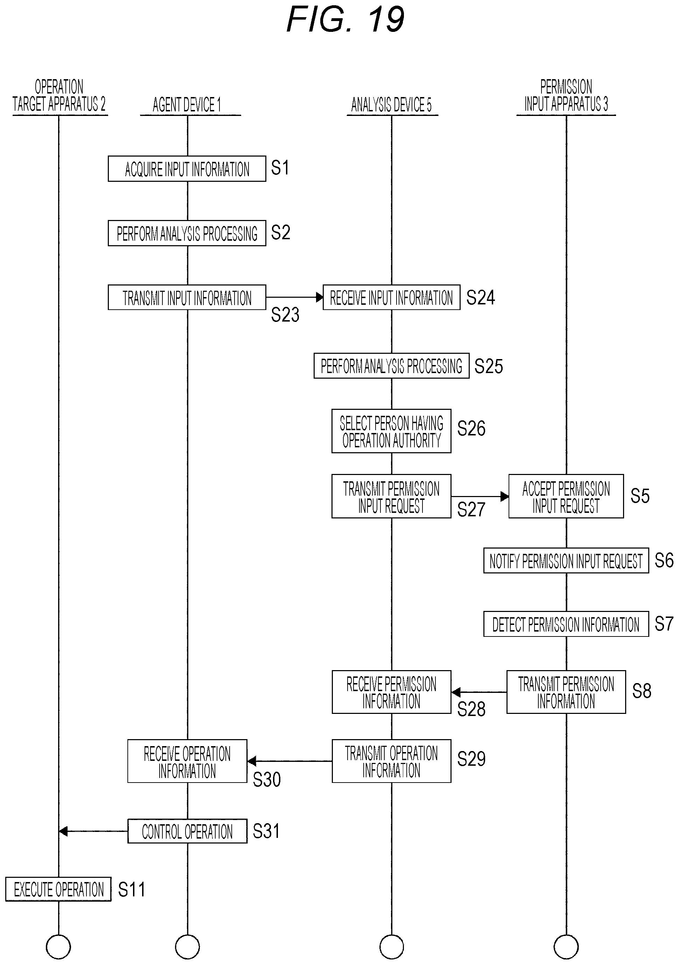

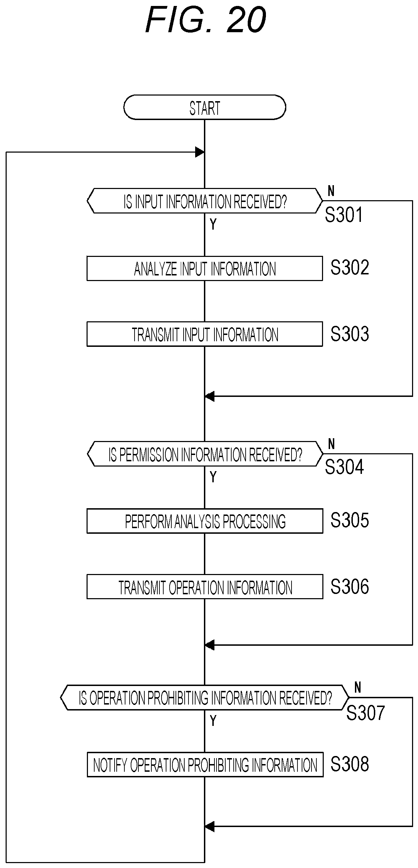

Processing of a second embodiment in an agent system will be described with reference to Figs. 19 and 20. Note that hereinafter, processing similar to processing of the first embodiment is denoted with the same reference symbol, and description thereof will be omitted.

An outline of the agent system in the second embodiment will be described with reference to Fig. 19. Fig. 19 shows one example of a processing flow to be performed by an agent device 1, an operation target apparatus 2 (television device 2), a permission input apparatus 3, and an analysis device 5.

To begin with, in step S1, the agent device 1 acquires the input information by voice and the like regarding the operation of the operation target apparatus 2 from the operation requester, and in step S2, performs necessary analysis processing on the acquired input information.

Thereafter, in step S23, the agent device 1 transmits the input information that has undergone the analysis processing to the analysis device 5.

In step S24, the analysis device 5 receives the input information from the agent device 1. Thereafter, in step S25, after performing analysis processing on the received input information, in step S26, the analysis device 5 confirms whether or not the operation requester is a person having operation authority. In a case where the operation requester is not a person having operation authority, the analysis device 5 selects the person having operation authority of the operation target apparatus 2 the operation requester is trying to operate.

Then, in step S27, the analysis device 5 selects the permission input apparatus 3 suitable for permission input from the current location or state of the person having operation authority, and transmits a permission input request to the permission input apparatus 3.

In step S5, on receipt of the permission input request from the agent device 1, in step S6, the permission input apparatus 3 notifies the person having operation authority of the permission input request, for example, by voice.

Then, in step S7, on detection of input of permission information by the person having operation authority, after analyzing the input permission information, in step S8, the permission input apparatus 3 transmits the permission information to the analysis device 5.

In step S28, on receipt of the permission information from the permission input apparatus 3, in step S29, the analysis device 5 transmits operation information for performing the operation of the operation target apparatus 2 from the operation requester to the agent device 1.

In step S30, on receipt of the operation information from the analysis device 5, in step S29, the agent device 1 transmits the operation information to the agent device 1.

In step S11, on receipt of the operation information from the agent device 1, the operation target apparatus 2 performs the operation of the operation target apparatus 2 on the basis of the received operation information.

As described above, in the second embodiment, the operation of the operation target apparatus 2 requested by the operation requester is implemented by obtaining the permission of the person having operation authority.

Note that in step S26, in a case where the operation requester has operation authority of the operation target apparatus 2, the agent device 1 advances the processing to step S29 without performing the processing of steps S27→S5 to S8→S28.

Furthermore, the analysis processing of the analysis device 5 in step S25 may be performed by the agent device 1 in the analysis processing of step S2. In this case, in step S29, the analysis device 5 transmits the permission information received from the permission input apparatus 3 in step S28 to the agent device 1. Then, in step S30, on receipt of the permission information from the analysis device 5, the agent device 1 transmits the operation information of the operation contents analyzed in step S2 to the operation target apparatus 2 in step S31.

Next, processing to be performed by the arithmetic unit 15 of the agent device 1 in order to implement the action of the agent system in the second embodiment will be described with reference to Fig. 20.

The arithmetic unit 15 performs a monitoring loop of steps S301→S304→S307.

In step S301, on receipt of the input information regarding the operation of the operation target apparatus 2 from the operation requester, the arithmetic unit 15 advances the processing to step S302. Thereafter, in step S302, the arithmetic unit 15 performs necessary analysis processing on the acquired input information.

Then, the arithmetic unit 15 transmits the input information that has undergone the analysis processing in step S303 to the analysis device 5.

Furthermore, in step S304, on receipt of the operation information from the analysis device 5, the arithmetic unit 15 advances the processing to step S305. After performing necessary analysis processing on the received operation information in step S305, the arithmetic unit 15 transmits the operation information to the operation target apparatus 2 in step S306.

Furthermore, on receipt of operation no-permission information in step S307, the arithmetic unit 15 advances the processing to step S308, and notifies operation prohibiting information. For example, it can be considered that the arithmetic unit 15 notifies a message by voice from the speaker 20 of the agent device 1 that the operation permission is not obtained.

Next, processing to be performed by the analysis device 5 in order to implement the action of the agent system in the second embodiment will be described with reference to Fig. 17. Descriptions of processing similar to processing of Fig. 17 will be omitted.

To begin with, as shown in step S303 of Fig. 20, on receipt of the input information from the agent device 1, the analysis device 5 starts processing from step S103 of the Fig. 17.

Furthermore, in step S119, the analysis device 5 transmits the operation information to the agent device 11.

Furthermore, in a case where no-permission information is received from the permission input apparatus 3 in step S112, and in a case where there is no other person having operation authority in step S115,
the analysis device 5 transmits the operation prohibiting information to the agent device 1 in step S116.

To begin with, in step S101, the analysis device 5 receives the input information from the agent device 1. Thereafter, in step S102, the analysis device 5 performs analysis processing on the received input information. With this operation, the analysis device 5 identifies the television device 2 and the operation contents for the television device 2 requested by the operation requester.

Then, in steps S103→S104, the analysis device 5 authenticates who the operation requester is, and acquires the person having operation authority information for the television device 2 identified in the processing of step S102.

In step S105, the analysis device 5 determines from the acquired information whether or not the operation requester is a person having operation authority. In a case where the operation requester is a person having operation authority, the arithmetic unit 15 determines that the operation requester has the authority to operate the television device 2, advances the processing to step S119, and transmits output information for performing the operation contents to the television device 2.

This allows the operation requested by the operation requester to be implemented in the television device 2. After the processing of step S119, the analysis device 5 ends the processing of Fig. 17.

In step S105, in a case where the operation requester does not have operation authority of the television device 2, the analysis device 5 performs processing of steps S106 to S110 similar to processing of the first embodiment, and transmits the permission information request to the selected permission input apparatus 3.

After the transmission of the permission information in step S110, the analysis device 5 performs processing of looping steps S111→S112→S113 until a predetermined period elapses in step S113.

Here, if the permission information is received from the permission input apparatus 3 in step S111 before the predetermined period elapses in step S113, the analysis device 5 advances the processing to step S117, and confirms whether or not the essential person having authority has been set among the selected persons having operation authority.

In a case where there is no setting of essential person having authority in step S117, if the permission information on any person having operation authority can be acquired from the permission input apparatus 3, the operation requester is permitted to operate the television device 2. Therefore, the analysis device 5 advances the processing from step S117 to S119, and transmits operation contents information acquired in step S102 to the television device 2. After the processing of step S119, the analysis device 5 ends the processing of Fig. 17.

With this operation, the operation of the television device 2 desired by the operation requester is executed.

Furthermore, in a case where there are essential persons having authority in step S117, the analysis device 5 determines in step S118 whether or not the permission information of all the essential persons having authority has been acquired. In step S118, in a case where the permission information of all the essential persons having authority has been acquired, the analysis device 5 advances the processing to step S119, and thereafter performs the similar processing as described above.

In step S117, in a case where the permission information of all the essential persons having authority has not acquired, that is, in a case where the permission information of another person having operation authority needs to be acquired, the analysis device 5 advances the processing to step S106, selects the next processing target person having operation authority, and thereafter performs the similar processing.

Next, on receipt of the no-permission information in step S112, the analysis device 5 advances the processing to step S116 regardless of whether or not the permission information of another person having operation authority is present, and notifies operation prohibiting information.

On the other hand, when the predetermined time elapses in step S113, the analysis device 5 determines in step S114 whether or not the processing target person having operation authority is an essential person having authority.

In step S114, in a case where the person having operation authority whose permission information cannot be received is an essential person having authority, the analysis device 5 advances the processing from step S114 to S116, and thereafter performs the similar processing as described above.

Furthermore, in step S114, in a case where the permission information needs to be received at least from any of the persons having operation authority, the analysis device 5 advances the processing to step S115, and determines whether or not there is another person having operation authority. In step S115, in a case where there is another person having operation authority, the analysis device 5 advances the processing to step S106, selects the next person having operation authority as a processing target, and thereafter performs the similar processing.

On the other hand, in a case where there is no other person having operation authority in step S115, there is no person having operation authority from whom permission can be acquired, and thus the analysis device 5 advances the processing to step S116, and thereafter performs the similar processing as described above.

Note that since the processing of the permission input apparatus 3 in the second embodiment is similar to the processing in the first embodiment shown in Fig. 18, descriptions thereof will be omitted.

### <8. Conclusion and modification>

According to the above embodiment, the following effects can be obtained.

The agent device 1 in the embodiment includes: the input signal acquisition unit 71 that acquires an input signal about the operation of the operation target apparatus 2; the information acquisition unit 74 that acquires information obtained by performing person having authority selection processing (S106 of Fig. 17) to select the person having authority who has permission authority about the operation instructed by the input signal acquired by the input signal acquisition unit 71, permission input apparatus selection processing (S108) to select the permission input apparatus 3 according to the situation of the selected person having authority, and reception processing (S111) to receive a signal regarding the operation permission from the selected permission input apparatus 3; and the apparatus control unit 75 that performs control according to the operation instructed by the input signal acquired by the input signal acquisition unit 71 on the basis of the information acquired by the information acquisition unit 74.

With this configuration, the operation of the operation target apparatus 2 is implemented according to the acquisition of the information regarding the operation permission of the person having operation authority. Furthermore, the permission input apparatus 3 to which the signal regarding the operation permission should be input can be selected and classified according to the situation of the person having operation authority at that time.

Therefore, it is possible to provide the permission input apparatus 3 using the input method that is convenient for performing the permission input according to the situation of the person having operation authority. Therefore, the person having operation authority can easily reply to the response request from the operation requester. Furthermore, since the operation requester can also receive a smooth response from the person having operation authority, it is possible to smoothly perform the operation of the operation target apparatus 2 by using the agent system.

The embodiment has described an example in which the arithmetic unit 15 (agent device 1) includes the transmission unit 77 (Fig. 13) configured to transmit a signal based on the input signal acquired by the input signal acquisition unit 71 to the analysis device 5, and the information acquisition unit 74 acquires information obtained by the analysis device 5 performing the person having authority selection processing (S106 of Fig. 17), the permission input apparatus selection processing (S108), and the reception processing (S111).

That is, the analysis device 5 separate from the agent device 1 is provided, and the person having authority selection processing, the permission input apparatus selection processing, and the reception processing are performed by the analysis device 5.

This allows the separate analysis device 5 to perform the processing for selecting the person having operation authority, selecting the permission input apparatus 3 from the situation of the selected person having operation authority, and acquiring the permission information from the permission input apparatus 3. The processing efficiency can be improved by distributing the processing to a plurality of information processing devices.

The embodiment has described an example in which the information acquisition unit 74 of the arithmetic unit 15 (agent device 1) performs the person having authority selection processing (S106 of Fig. 17), the permission input apparatus selection processing (S108), and the reception processing (S111) (see Fig. 4).

That is, the agent device 1 performs the person having authority selection processing, the permission input apparatus selection processing, and the reception processing without using another information processing device such as the analysis device 5.

This allows one information processing device to perform the processing for selecting the person having operation authority, selecting the permission input apparatus 3 from the situation of the selected person having operation authority, and acquiring the permission information from the permission input apparatus 3.

The embodiment has described an example including the contents analysis unit 73 that analyzes the operation requester and the operation contents from the input signal acquired by the input signal acquisition unit 71 of the arithmetic unit 15 (agent device 1) (S102 of Fig. 17) .

With this configuration, by analyzing the input signal such as voice, action, and the like for operating the operation target apparatus 2 from the operation requester, the operation requester is identified, and the input information regarding the operation contents to the operation target apparatus 2 is acquired.

Therefore, the operation requester can operate the operation target apparatus 2 verbally or by an action such as a gesture even if the operation requester does not have a special operation device such as a remote controller. Therefore, it is possible to improve the convenience of the operation requester to operate the apparatus.

The embodiment has described an example in which in the person having authority selection processing (S104 of Fig. 17), the arithmetic unit 15 (agent device 1) determines whether or not the operation requester has authority to perform the operation contents (S105), and in a case where the operation requester does not have the authority, the arithmetic unit 15 performs the permission input apparatus selection processing (S109)

In a case where the operation requester has the operation authority of the operation target apparatus 2, permission of another person having operation authority is unnecessary. Therefore, only when the operation requester does not have the operation authority of the operation target apparatus 2, the processing for selecting the permission input apparatus 3 for the permission input by the person having operation authority is performed.

In a case where the operation requester himself or herself has the operation authority, it is unnecessary to obtain permission of the person having authority by using the permission input apparatus 3. Therefore, in such a case, by not performing the processing for selecting the permission input apparatus 3, it is possible to reduce the processing load and improve the convenience of the user.

The embodiment has described an example in which in the person having authority selection processing (S106 of Fig. 17), the arithmetic unit 15 (agent device 1) selects the permission input apparatus 3 according to the location or action (state) of the person having operation authority.

This makes it possible to set an apparatus near the person having operation authority or an apparatus possessed by the person having operation authority as the permission input apparatus 3 according to the current location of the person having operation authority. For example, in a case where the person having operation authority is out of home, it is preferable to set an apparatus such as a mobile phone currently possessed by the person having operation authority as the permission input apparatus 3, instead of an apparatus at home of the person having operation authority. Furthermore, for example, in a case where the person having operation authority is performing an action such as cooking that cannot be stopped, an apparatus that allows voice input without using a hand can be set as the permission input apparatus 3.

In this way, it is convenient that the permission input apparatus 3 can be changed according to the location or state of the user in that the permission input can be easily performed for the person having operation authority. It is also beneficial for the operation requester side who wants to operate the operation target apparatus 2 immediately, that permission can be smoothly obtained by enabling permission input according to various situations.

The embodiment has described an example in which in the permission input apparatus selection processing (S109 of Fig. 17), the arithmetic unit 15 (agent device 1) selects the input method of operation permission to the permission input apparatus 3 according to the location or action (state) of the person having operation authority (S108)

For example, in a case where the person having operation authority is on a train, it is considered to request a reply by email instead of voice input to a mobile phone, which is the permission input apparatus 3. Furthermore, in a case where the person having operation authority is cooking and is occupied, it is considered to request voice input instead of manual input to the permission input apparatus 3.

That is, since it is possible to provide the input method in which the permission input can be easily performed for the situation of the person having operation authority, it is convenient for the person having operation authority. It is easy to obtain a response of permission from the person having operation authority, which is also beneficial to the operation requester side who wants to operate the operation target apparatus 2 immediately.

In the embodiment, the apparatus control unit 77 of the arithmetic unit 15 (agent device 1) performs the processing about the operation instructed by the input signal acquired by the input signal acquisition unit 71 on the basis of the acquisition of information indicating permission from the permission input apparatus 3 corresponding to any of the person having operation authority (Sill, S119 of Fig. 17).

When the operation requester requests the operation of the operation target apparatus 2, it is also considered that information regarding permission of the operation cannot be input to the permission input apparatus 3 due to the circumstance that there is no permission input apparatus 3 around the person having operation authority and the like. Therefore, by setting a plurality of persons having operation authority, even in a case where the information regarding permission cannot be acquired from one person having operation authority, if the information can be acquired from another person having operation authority, the operation requester can operate the operation target apparatus 2.

Therefore, when permission input of the operation of the operation requester is requested, if either one of the persons having operation authority can perform permission input, even if there is a person having operation authority who is currently in a situation where it is difficult to perform permission input, another person having operation authority who can respond can smoothly perform permission input. Therefore, the operation requester can smoothly acquire the operation permission of the operation target apparatus 2, improving the convenience.

In the embodiment, the apparatus control unit 77 of the arithmetic unit 15 (agent device 1) can perform the processing about the operation instructed by the input signal acquired by the input signal acquisition unit 71 on the basis of the information acquisition indicating the permission from all of the permission input apparatuses 3 corresponding to a plurality of persons having operation authority (S114, S117, S118 of Fig. 17).

Permission from a plurality of persons having operation authority may be required when the operation requester operates the operation target apparatus 2. This is a case where, for example, when the operation requester is a child, obtaining permission from both the father and mother who are the persons having operation authority is a condition. In this way, a plurality of essential persons having authority can be set.

For example, in a case where there is a plurality of persons having operation authority, even in a case where one person having operation authority feels that the operation requester may operate the operation target apparatus, the other person having operation authority may not want to give permission. In such a case, on condition that the permission of all set persons having operation authority is obtained, it is possible to impose on the operation requester a permission format that reflects the intention of each of the plurality of persons having operation authority. For example, in an educational policy when raising a child and the like, it is effective in a case where parents want to allow operation of the operation target apparatus upon mutual agreement and the like.

The embodiment has described an example in which in the reception processing of the arithmetic unit 15 (agent device 1), in a case where the signal regarding the operation permission from the permission input apparatus 3 cannot be received within a predetermined time from the request of the signal, the permission input apparatus 3 selected for the other person having authority described above is requested to input the signal regarding operation permission (S113, S115 of Fig. 17).

In a case where the operation permission needs to be received at least from only one of the set plurality of persons having operation authority, if no permission is given by one person having operation authority, the apparatus operation permission is more efficiently acquired by performing permission request for the operation permission to the other person having operation authority.

This makes it possible to efficiently confirm whether or not the set person having operation authority is in a state of being able to give permission.

When obtaining permission of the operation of the operation target apparatus from the person having operation authority, the person having operation authority is in various states, such as a state in which permission cannot be given immediately and a state in which permission can be given immediately. Therefore, if confirmation is not made with other person having operation authority until permission of the person having operation authority is not given, even though the other person having operation authority can give permission immediately, the operation requester may have to wait for the operation of the operation target apparatus. Therefore, in a case where the permission information is not input within a certain time, by asking for permission to other operation requesters at any time, the operation requester can quickly determine whether or not the operation of the operation target apparatus can be performed.

The embodiment has described an example in which the person having operation authority is set according to the operation type of the operation target apparatus 3 (Fig. 6).

With this configuration, it is possible to set whether or not permission is required for each operation of the apparatus of the operation requester, for example, it is possible to use the Internet in a computer device that is an apparatus to be operated, but in a case where a product and the like is purchased, permission from the person having operation authority is required.

Furthermore, for example, when operating the television device 2, it is possible to set the person having operation authority for each channel, and to set the person having operation authority for each operation such as recording and fast-forwarding.

If restriction is set for the entire apparatus, there is a possibility that the range of operation of the operation requester will be narrowed more than necessary. Therefore, by subdividing the operation range of the operation target apparatus by the operation requester, it is unnecessary to narrow the operation range of the operation requester more than necessary.

The embodiment has described an example in which the input signal about the operation of the operation target apparatus 2 is a voice signal, and the contents analysis unit 73 of the arithmetic unit 15 (agent device 1) identifies the operation requester to be a target of voice.

This makes it possible to identify the operation requester from the voice such as speech sound of the operation requester. Therefore, the operation requester can be identified simply by talking to the agent device 1 and the like, and can input the operation of the operation target apparatus 2 without unnecessary effort.

The embodiment has described an example in which the input signal about the operation of the operation target apparatus 2 is an input signal by an action, and the contents analysis unit 73 of the arithmetic unit 15 (agent device 1) identifies the operation requester to be a target of action.

This allows the operation requester to be identified from a gesture and other actions. Therefore, the operation requester can be identified only by performing an action toward the agent device 1 and the like, and can input the operation of the operation target apparatus 2 without unnecessary effort.

Furthermore, the permission input apparatus 3 in the embodiment includes: the permission request reception unit 91 configured to receive the permission input request about the operation of the operation target apparatus 2, the permission input request being transmitted by being selected by the person having authority selection processing to select the person having authority who has permission authority about the operation of the operation target apparatus 2, and the permission input apparatus selection processing to select the permission input apparatus 3 according to the situation of the selected person having authority; and the permission information transmission unit 93 configured to transmit the signal regarding the operation permission of the operation target apparatus 2 in response to detection of the permission input.

Furthermore, the analysis device 5 in the embodiment includes: the person having authority selection unit 102 configured to select the person having authority who has permission authority about the operation instructed by the input signal about the operation in response to acquisition of the input signal about the operation of the operation target apparatus 2; the permission input apparatus selection unit 103 configured to select the permission input apparatus 3 according to the situation of the person having authority selected by the person having authority selection unit 102; and the reception processing unit 104 configured to receive a signal regarding operation permission from the permission input apparatus 3 selected by the permission input apparatus selection unit 103.

Note that in the processing of step S102 of Fig. 17, in the analysis processing of input information, in a case where the input data is voice information, it is considered that the arithmetic unit 15 of the agent device 1 acquires the intention of the user's urgency by analysis.

It is considered that the urgency is detected, for example, in a case where the generated wording includes terms such as "hurry", "early", and "immediately", or the urgency is detected from intonation of utterance.

In a case where the urgency obtained from the utterance exceeds a certain threshold, it is possible to acquire the operation authority in parallel action.

In such an urgent case, the arithmetic unit 15 selects all persons having operation authority set for the operation target apparatus 2 in step S106. Then, in step S107, the arithmetic unit 15 acquires, from the person having authority situation management DB 63, the location and state information of all operation right holders at once.

In step S108, the arithmetic unit 15 selects the permission input method on the basis of the information on the location and state of each person having operation authority. Then, in step S109, for all the persons having operation authority, when the setting of the permission input apparatus 3 that requests input of permission information is completed, in step S110, the arithmetic unit 15 simultaneously transmits the input request for the permission information by the permission input method corresponding to each permission input apparatus 3.

Then, if the permission input information in step Sill is received before the predetermined time elapses in step S113, the arithmetic unit 15 transmits the operation information input by the action requester to the operation target apparatus 2 in step S119.

This allows quick acquisition of permission information in an urgent case.

Note that in a case where the predetermined time elapses in step S113, the arithmetic unit 15 advances the processing to step S116 without performing the processing of steps S114 and S115, and notifies the operation requester of the operation prohibiting information. Note that the length of the predetermined time can be changed according to urgency of the operation requester. For example, the predetermined time is set to be longer as the urgency increases.

Furthermore, it can be set that the permission of the person having operation authority is unnecessary in a case where the urgency increases. In this case, the agent device 1 can also perform processing for notifying the person having authority of emergency.

The program of the embodiment is a program that causes, for example, a CPU, a DSP, and the like or a device including a CPU and a DSP to perform the processing of the Fig. 17 shown in the above embodiment.

That is, the program of the embodiment is a program for causing an information processing device to execute: an input signal acquisition function of acquiring an input signal about an operation of an apparatus; an information acquisition function of acquiring information obtained by performing person having authority selection processing to select a person having authority who has permission authority about the operation instructed by the input signal acquired by the input signal acquisition function, permission input apparatus selection processing to select a permission input apparatus according to a situation of the selected person having authority, and reception processing to receive a signal regarding operation permission from the selected permission input apparatus; and
an apparatus control function of performing control according to the operation instructed by the input signal acquired by the input signal acquisition function on the basis of the information acquired by the information acquisition function.

With such a program, the above-described agent device 1 (information processing device) can be implemented.

Such a program can be recorded in advance in a HDD serving as a recording medium built in an apparatus such as a computer device or a ROM and the like in a microcomputer having a CPU.

Alternatively, the program can be temporarily or permanently stored (recorded) in a removable recording medium including a flexible disk, a compact disc read only memory (CD-ROM), a magnet optical (MO) disk, a digital versatile disc (DVD), a Blu-ray disc (registered trademark), a magnetic disk, a semiconductor memory, a memory card, and the like. Such a removable recording medium can be provided as so-called package software.

Furthermore, such a program can be installed from a removable recording medium to a personal computer and the like, or can be downloaded from a download site via a network such as LAN or the Internet.

Furthermore, such a program is suitable for extensive provision of the agent device 1 of the embodiment. For example, by downloading the program to a personal computer, portable information processing device, home electric appliance, recording and playback apparatus, broadcasting apparatus, mobile phone, game machine, video apparatus, personal digital assistant (PDA), and the like, the personal computer and the like can be used as the information processing device of the present disclosure.

Furthermore, the processing described using the flowchart in the present specification does not necessarily have to be performed in the order indicated in the flowchart. Some processing steps may be performed in parallel. Furthermore, additional processing steps may be adopted, and some processing steps may be omitted.

The embodiment of the present disclosure has been described above with reference to the accompanying drawings, but the technical scope of the present disclosure is not limited to the above description. It is obvious that persons of ordinary knowledge in the technical field of the present disclosure can conceive various modifications or alterations within the scope of the technical idea described in the claims, and of course these also fall within the technical scope of the present disclosure.

Furthermore, effects described in the present specification are merely descriptive or illustrative and not restrictive. That is, the technology according to the present disclosure can produce other effects obvious to those skilled in the art from the description in the present specification, in addition to or instead of the effects described above.

Note that the present technology can also have the following configurations.
(1) An information processing device including:
   an input signal acquisition unit configured to acquire an input signal about an operation of an apparatus;
   an information acquisition unit configured to acquire information obtained by performing person having authority selection processing to select a person having authority who has permission authority about the operation instructed by the input signal acquired by the input signal acquisition unit, permission input apparatus selection processing to select a permission input apparatus according to a situation of the selected person having authority, and reception processing to receive a signal regarding operation permission from the selected permission input apparatus; and
   an apparatus control unit configured to perform control according to the operation instructed by the input signal acquired by the input signal acquisition unit on the basis of the information acquired by the information acquisition unit.
(2) The information processing device according to (1), further including
   a transmission unit configured to transmit a signal based on the input signal acquired by the input signal acquisition unit to an analysis device,
   in which the information acquisition unit acquires the information obtained by performing the person having authority selection processing, the permission input apparatus selection processing, and the reception processing in the analysis device.
(3) The information processing device according to (1), in which
   the information acquisition unit performs the person having authority selection processing, the permission input apparatus selection processing, and the reception processing.
(4) The information processing device according to any one of (1) to (3), further including
   a contents analysis unit configured to analyze an operation requester and operation contents from the input signal acquired by the input signal acquisition unit.
(5) The information processing device according to (4), in which
   the person having authority selection processing includes determining whether or not the operation requester has authority to perform the operation contents, and performing the permission input apparatus selection processing in a case where the operation requester does not have the authority.
(6) The information processing device according to any one of (1) to (5), in which
   the permission input apparatus selection processing includes selecting the permission input apparatus according to a location or action of the person having authority.
(7) The information processing device according to any one of (1) to (6), in which
   the permission input apparatus selection processing includes selecting an input method of the operation permission to the permission input apparatus according to a location or action of the person having authority.
(8) The information processing device according to any one of (1) to (7), in which
   the apparatus control unit performs processing on the operation instructed by the input signal acquired by the input signal acquisition unit on the basis of the acquisition of the information indicating the permission from the permission input apparatus corresponding to any of the person having authority.
(9) The information processing device according to any one of (1) to (7), in which
   the apparatus control unit performs processing on the operation instructed by the input signal acquired by the input signal acquisition unit on the basis of the information acquisition indicating the permission from all of the permission input apparatus corresponding to each of a plurality of the persons having authority.
(10) The information processing device according to any one of (1) to (8), in which
   in a case where the signal regarding the operation permission from the permission input apparatus is not received within a predetermined time from a request for the signal, the reception processing includes requesting a permission input apparatus selected for another person having authority to input the signal regarding the operation permission.
(11) The information processing device according to any one of (1) to (10), in which
   the person having authority is set according to an operation type of the apparatus.
(12) The information processing device according to any one of (4) to (11), in which
   the input signal about the operation of the apparatus is a signal by voice, and
   the contents analysis unit identifies the operation requester to be a target of the voice.
(13) The information processing device according to any one of (4) to (12), in which
   the input signal about the operation of the apparatus is an input signal by an action, and
   the contents analysis unit identifies the operation requester to be a target of the action.
(14) An information processing method to be performed by an information processing device, the information processing method including:
   input signal acquisition processing of acquiring an input signal about an operation of an operation target apparatus;
   information acquisition processing of acquiring information obtained by performing person having authority selection processing to select a person having authority who has permission authority about the operation instructed by the input signal acquired by the input signal acquisition processing, permission input apparatus selection processing to select a permission input apparatus according to a situation of the selected person having authority, and reception processing to receive a signal regarding operation permission from the selected permission input apparatus; and
   apparatus control processing of performing control according to the operation instructed by the input signal acquired by the input signal acquisition processing on the basis of the information acquired by the information acquisition processing.
(15) An information processing device including:
   a permission request reception unit configured to receive a permission input request about an operation of an operation target apparatus, the permission input request being transmitted by selection by person having authority selection processing to select a person having authority who has permission authority about the operation of the operation target apparatus, and permission input apparatus selection processing to select a permission input apparatus according to a situation of the selected person having authority; and
   a permission information transmission unit configured to transmit a signal regarding the operation permission of the operation target apparatus in response to detection of the permission input.
(16) An information processing method to be performed by an information processing device, the information processing method including:
   permission request reception processing of receiving a permission input request about an operation of an operation target apparatus, the permission input request being transmitted by selection by person having authority selection processing to select a person having authority who has permission authority about the operation of the operation target apparatus, and permission input apparatus selection processing to select a permission input apparatus according to a situation of the selected person having authority; and
   permission information transmission processing of transmitting a signal regarding the operation permission of the operation target apparatus in response to detection of the permission input.
(17) An information processing device including:
   a person having authority selection unit configured to select a person having authority who has permission authority about an operation instructed by an input signal about the operation in response to acquisition of the input signal about the operation of an operation target apparatus;
   a permission input apparatus selection unit configured to select a permission input apparatus according to a situation of the person having authority selected by the person having authority selection unit; and
   a reception processing unit configured to receive a signal regarding operation permission from the permission input apparatus selected by the permission input apparatus selection unit.
(18) An information processing method to be performed by an information processing device, the information processing method including:
   processing of selecting a person having authority who has permission authority about an operation instructed by an input signal about the operation in response to acquisition of the input signal about the operation of an operation target apparatus;
   processing of selecting a permission input apparatus according to a situation of the selected person having authority; and
   processing of receiving a signal regarding operation permission from the selected permission input apparatus.

### REFERENCE SIGNS LIST

- 1: Agent device
- 2: Operation target apparatus (television device)
- 3: Permission input apparatus
- 5: Analysis device
- 71: Input signal acquisition unit
- 74: Information acquisition unit
- 75: Apparatus control unit
- 91: Permission request reception unit
- 93: Permission information transmission unit
- 102: Person having authority selection unit
- 103: Permission input apparatus selection unit
- 104: Reception processing unit

## Claims

1. An information processing device comprising:
an input signal acquisition unit configured to acquire an input signal about an operation of an apparatus;
an information acquisition unit configured to acquire information obtained by performing person having authority selection processing to select a person having authority who has permission authority about the operation instructed by the input signal acquired by the input signal acquisition unit, permission input apparatus selection processing to select a permission input apparatus according to a situation of the selected person having authority, and reception processing to receive a signal regarding operation permission from the selected permission input apparatus; and
an apparatus control unit configured to perform control according to the operation instructed by the input signal acquired by the input signal acquisition unit on a basis of the information acquired by the information acquisition unit.

2. The information processing device according to claim 1, further comprising
a transmission unit configured to transmit a signal based on the input signal acquired by the input signal acquisition unit to an analysis device,
wherein the information acquisition unit acquires the information obtained by performing the person having authority selection processing, the permission input apparatus selection processing, and the reception processing in the analysis device.

3. The information processing device according to claim 1, wherein
the information acquisition unit performs the person having authority selection processing, the permission input apparatus selection processing, and the reception processing.

4. The information processing device according to claim 1, further comprising
a contents analysis unit configured to analyze an operation requester and operation contents from the input signal acquired by the input signal acquisition unit.

5. The information processing device according to claim 4, wherein
the person having authority selection processing includes determining whether or not the operation requester has authority to perform the operation contents, and performing the permission input apparatus selection processing in a case where the operation requester does not have the authority.

6. The information processing device according to claim 1, wherein
the permission input apparatus selection processing includes selecting the permission input apparatus according to a location or action of the person having authority.

7. The information processing device according to claim 1, wherein
the permission input apparatus selection processing includes selecting an input method of the operation permission to the permission input apparatus according to a location or action of the person having authority.

8. The information processing device according to claim 1, wherein
the apparatus control unit performs processing on the operation instructed by the input signal acquired by the input signal acquisition unit on a basis of the acquisition of the information indicating the permission from the permission input apparatus corresponding to any of the person having authority.

9. The information processing device according to claim 1, wherein
the apparatus control unit performs processing on the operation instructed by the input signal acquired by the input signal acquisition unit on a basis of the information acquisition indicating the permission from all of the permission input apparatus corresponding to each of a plurality of the persons having authority.

10. The information processing device according to claim 1, wherein
in a case where the signal regarding the operation permission from the permission input apparatus is not received within a predetermined time from a request for the signal, the reception processing includes requesting a permission input apparatus selected for another person having authority to input the signal regarding the operation permission.

11. The information processing device according to claim 1, wherein
the person having authority is set according to an operation type of the apparatus.

12. The information processing device according to claim 4, wherein
the input signal about the operation of the apparatus is a signal by voice, and
the contents analysis unit identifies the operation requester to be a target of the voice.

13. The information processing device according to claim 4, wherein
the input signal about the operation of the apparatus is an input signal by an action, and
the contents analysis unit identifies the operation requester to be a target of the action.

14. An information processing method to be performed by an information processing device, the information processing method comprising:
input signal acquisition processing of acquiring an input signal about an operation of an apparatus;
information acquisition processing of acquiring information obtained by performing person having authority selection processing to select a person having authority who has permission authority about the operation instructed by the input signal acquired by the input signal acquisition processing, permission input apparatus selection processing to select a permission input apparatus according to a situation of the selected person having authority, and reception processing to receive a signal regarding operation permission from the selected permission input apparatus; and
apparatus control processing of performing control according to the operation instructed by the input signal acquired by the input signal acquisition processing on a basis of the information acquired by the information acquisition processing.

15. An information processing device comprising:
a permission request reception unit configured to receive a permission input request about an operation of an operation target apparatus, the permission input request being transmitted by selection by person having authority selection processing to select a person having authority who has permission authority about the operation of the operation target apparatus, and permission input apparatus selection processing to select a permission input apparatus according to a situation of the selected person having authority; and
a permission information transmission unit configured to transmit a signal regarding the operation permission of the operation target apparatus in response to detection of the permission input.

16. An information processing method to be performed by an information processing device, the information processing method comprising:
permission request reception processing of receiving a permission input request about an operation of an operation target apparatus, the permission input request being transmitted by selection by person having authority selection processing to select a person having authority who has permission authority about the operation of the operation target apparatus, and permission input apparatus selection processing to select a permission input apparatus according to a situation of the selected person having authority; and
permission information transmission processing of transmitting a signal regarding the operation permission of the operation target apparatus in response to detection of the permission input.

17. An information processing device comprising:
a person having authority selection unit configured to select a person having authority who has permission authority about an operation instructed by an input signal about the operation in response to acquisition of the input signal about the operation of an operation target apparatus;
a permission input apparatus selection unit configured to select a permission input apparatus according to a situation of the person having authority selected by the person having authority selection unit; and
a reception processing unit configured to receive a signal regarding operation permission from the permission input apparatus selected by the permission input apparatus selection unit.

18. An information processing method to be performed by an information processing device, the information processing method comprising:
processing of selecting a person having authority who has permission authority about an operation instructed by an input signal about the operation in response to acquisition of the input signal about the operation of an operation target apparatus;
processing of selecting a permission input apparatus according to a situation of the selected person having authority; and
processing of receiving a signal regarding operation permission from the selected permission input apparatus.
